(19) Europäisches Patentamt
European Patent Office
Office européen des brevets

(11) **EP 4 383 625 A1**

(12) **EUROPEAN PATENT APPLICATION**
published in accordance with Art. 153(4) EPC

(43) Date of publication:
**12.06.2024 Bulletin 2024/24**

(21) Application number: **22852178.7**

(22) Date of filing: **02.08.2022**

(51) International Patent Classification (IPC):
**H04L 5/00** (2006.01)     **H04W 72/04** (2023.01)

(52) Cooperative Patent Classification (CPC):
**H04L 5/00; H04W 72/04**

(86) International application number:
**PCT/CN2022/109690**

(87) International publication number:
**WO 2023/011466 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021 CN 202110898619**

(71) Applicant: **Vivo Mobile Communication Co., Ltd.
Dongguan, Guangdong 523863 (CN)**

(72) Inventors:
• **LIU, Siqi**
**Dongguan, Guangdong 523863 (CN)**
• **LI, Gen**
**Dongguan, Guangdong 523863 (CN)**
• **JI, Zichao**
**Dongguan, Guangdong 523863 (CN)**

(74) Representative: **Conti, Marco
Bugnion S.p.A.
Via di Corticella, 87
40128 Bologna (IT)**

(54) **CONTROL RESOURCE MONITORING METHOD, DEVICE, AND READABLE STORAGE MEDIUM**

(57)     Embodiments of the present application provide a control resource monitoring method and apparatus and a readable storage medium, which belong to the field of communication technology. The method includes: determining, by a terminal, a virtual object and/or an object group; determining, by the terminal, a control resource processing capability corresponding to the virtual object and/or a control resource processing capability corresponding to the object group based on the virtual object and/or object group; and monitoring, by the terminal, the control resource based on the control resource processing capability; where the virtual object and/or object group is determined according to at least one of the following: a first object or a self-scheduling resource of the first object; and a second object or a resource of scheduling the first object by the second object; where the first object is scheduled by at least two objects, and the second object is at least part of the objects that schedule the first object.

FIG. 2

**Description**

**CROSS-REFERENCE TO RELATED APPLICATIONS**

This application claims priority to Chinese Patent Application No. 202110898619.9, filed on August 5, 2021 in China, which is incorporated herein by reference in its entirety.

**TECHNICAL FIELD**

The embodiments of the present application relate to the field of communication technology, and specifically relate to a control resource monitoring method and apparatus and a readable storage medium.

**BACKGROUND**

In the release 15 (Release 15) system, the physical downlink control channel (Physical Downlink Control Channel, PDCCH) processing capability allocation of user equipment (User Equipment, UE) is grouped according to a subcarrier bandwidth (SubCarrier Spacing, SCS) of a scheduling cell. Since a cell only has one scheduling cell (self-scheduling, or scheduled by another cell), grouping can be correct. However, if a cell is scheduled by two scheduling cells, especially when SCSs of the scheduling cell and the scheduled cell are different, normal grouping cannot be performed, resulting in the UE being unable to allocate the ability to monitor the PDCCH, resulting in communication failure.

**SUMMARY**

The purpose of the embodiments of this application is to provide a control resource monitoring method and apparatus and a readable storage medium to solve the technical problem that a cell is scheduled by two scheduling cells and the UE cannot allocate the ability to monitor the PDCCH, resulting in communication failure.

According to a first aspect, embodiments of the present application provide a control resource monitoring method, including:

determining, by a terminal, a virtual object and/or an object group;
determining, by the terminal, a control resource processing capability corresponding to the virtual object and/or a control resource processing capability corresponding to the object group based on the determined virtual object and/or object group; and
monitoring, by the terminal, a control resource according to the control resource processing capability;
where the virtual object and/or object group is determined according to at least one of the following:

a first object or a self-scheduling resource of the first object; and
a second object or a resource of scheduling the first object by the second object.

Optionally, the self-scheduling resource of the first object may be a control resource used by the first object for self-scheduling.
Optionally, the resource for scheduling the first object by the second object may be a control resource for scheduling the first object by the second object;
where the first object is scheduled by at least two objects, and the second object is at least part of the objects that schedule the first object.
According to a second aspect, embodiments of the present application provide a control resource monitoring apparatus, including:

a first determination module, configured to determine a virtual object and/or an object group;
a second determination module, configured to determine a control resource processing capability corresponding to the virtual object and/or a control resource processing capability corresponding to the object group based on the determined virtual object and/or object group; and
a monitoring module, configured to monitor a control resource according to the control resource processing capability;
where the virtual object and/or object group is determined according to at least one of the following:

a first object or a self-scheduling resource of the first object; and
a second object or a resource of scheduling the first object by the second object;
where the first object is scheduled by at least two objects, and the second object is at least part of the objects that schedule the first object.

According to a third aspect, the embodiments of the present application provide a terminal, including a processor, a memory, and a program or an instruction stored in the memory and executable on the processor, and when the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, the steps of the method in the first aspect are implemented.

According to a fifth aspect, an embodiment of this application provides a chip. The chip includes a processor and a communications interface, the communications interface is coupled to the processor, and the processor is configured to run a program or an instruction to implement the method according to the first aspect.

According to a sixth aspect, an embodiment of the present application further provides a computer program product stored in a non-instantaneous storage medium, and the computer program product is executed by at least one processor to implement steps of the method according to the first aspect.

In the embodiment of the present application, the first object scheduled by at least two objects and/or the second object that schedules the first object is defined as a virtual object, and the control resource processing capability of the virtual object is determined to realize that in a scenario in which one cell is scheduled by two scheduling cells, the UE can allocate the ability to monitor the PDCCH to prevent communication failure.

## BRIEF DESCRIPTION OF DRAWINGS

FIG. 1 is a structural diagram of a wireless communication system;

FIG. 2 is a schematic flowchart of a control resource monitoring method provided by an embodiment of the present application;

FIG. 3a is a first schematic diagram of an application scenario according to an embodiment of this application;

FIG. 3b is a second schematic diagram of an application scenario provided by an embodiment of the present application;

FIG. 3c is a schematic diagram 3 of an application scenario provided by an embodiment of the present application;

FIG. 3d is a schematic diagram 4 of an application scenario provided by an embodiment of the present application;

FIG. 3e is a schematic diagram 5 of an application scenario provided by an embodiment of the present application;

FIG. 3f is a sixth schematic diagram of an application scenario provided by an embodiment of the present application;

FIG. 3g is a seventh schematic diagram of an application scenario provided by an embodiment of the present application;

FIG. 4 is a schematic structural diagram of a control resource monitoring apparatus provided by an embodiment of the present application;

FIG. 5 is a first schematic structural diagram of a terminal according to an embodiment of this application; and

FIG. 6 is a second schematic structural diagram of a terminal according to an embodiment of this application.

## DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a designated order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that the technology described in the embodiments of this application is not limited to a Long Term Evolution (Long Term Evolution, LTE)/LTE-Advanced (LTE-Advanced, LTE-A) system, and may also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a new radio (NR) system is described in the following description for illustrative purposes, and the NR terminology is used in most of the following description, although these technologies can also be applied to applications other than the NR system application, such as the 6th generation (6G) communication system.

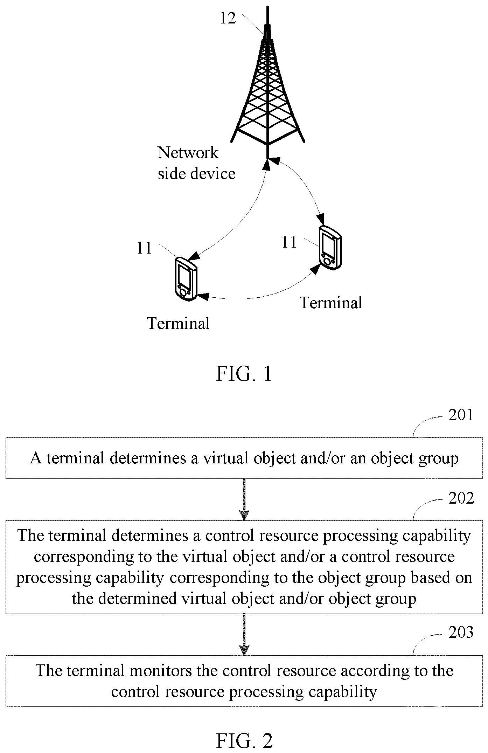

FIG. 1 is a block diagram of a wireless communications system to which embodiments of this application can be applied. The wireless communications system includes a terminal 11 and a network side device 12. The terminal 11 may also be called a terminal device or user equipment (User Equipment, UE), and the terminal 11 may be a mobile phone, a tablet personal computer (Tablet Personal Computer), a laptop computer (Laptop Computer) or a notebook computer, a personal digital Assistant (User Equipment, PDA), a palmtop computer, a netbook, an ultra-mobile personal computer (ultra-mobile personal computer, UMPC), a mobile Internet device (Mobile Internet Device, MID), augmented reality (augmented reality, AR)/virtual reality (virtual reality, VR) equipment, robot, wearable device (Wearable Device), vehicle-mounted equipment (Vehicle User Equipment, VUE), pedestrian terminal (Pedestrian User Equipment, PUE), smart home (home equipments with wireless communication function, such as refrigerator, TV, washing machine or furniture), and other terminal side equipments. The wearable device includes: smart watches, smart bracelets, smart headphones, smart glasses, smart jewelry (smart bracelets, smart bracelets, smart rings, smart necklaces, smart anklets, smart anklets, etc.), smart wristbands, smart clothing, game console, etc. It should be noted that a specific type of the terminal 11 is not limited in the embodiments of this application. The network side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a wireless local area network (Wireless Local Area Networks, WLAN) access point, a WiFi (WiFi) node, a transmitting receiving point (Transmitting Receiving Point, TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited.

In order to better understand the solutions of the embodiments of this application, the following content is first introduced:

The 5G NR system supports configuring one or more carriers (Component Carrier, CC) or cells for UE. When the UE is configured in single carrier mode or self-scheduling mode under carrier aggregation (Carrier Aggregation, CA), each CC or cell can be configured with multiple control resource sets (Control resource set, CORESET) and multiple search spaces (Search Space, SS), including Common Search Space (Common Search Space, CSS) and UE-specific Search Space (UE-specific Search Space, USS). The network may flexibly configure the quantity of blind detections for each search space set, and the CORESET may be flexibly associated with the search space set. According to the configured CORESET and SS, the UE blindly detects PDCCH by using various radio network temporary identifiers (Radio Network Temporary Identity, RNTI), demodulates Downlink Control Information (Downlink Control Information, DCI), and obtains the scheduling information of each cell. Each DCI schedules data for one cell.

If the channel quality of some cells is not good enough, or the channel blocking probability is high, the network can configure cross-carrier scheduling for the UE, that is, configure the control channel in other cells with better channel quality (for example, Primary cell (Primary cell, PCell)), to schedule data of other cells (for example, Secondary Cell (Secondary Cell, SCell)) across carriers. SCSs of the scheduling cell (scheduling cell) and the scheduled cell (scheduled cell) may be the same or different. The scheduling cell may be in a self-scheduling mode, and in this case, the cell only schedules itself. If configured with the cross-carrier scheduling, the scheduling cell may also schedule one or more scheduled cells other than the scheduling cell. The scheduled cell does not have its own PDCCH and can only be scheduled by a scheduling cell. In the Release 15 NR system, one cell can only be scheduled by one scheduling cell (namely, the cell can only be scheduled by itself or by another cell), and the PCell can only be scheduled by the PCell itself.

In order to reduce the implementation complexity of the UE, the NR system specifies the control resource processing capability of the UE in blindly detecting the PDCCH of a CC or cell. This capability consists of two parts: the maximum number of PDCCH candidates that can be blindly detected within a slot (slot) or span (span), and the maximum number of channel estimates required by the UE to perform blind detection, that is, the number of non-overlapping control channel elements (Control Channel Element, CCE). The control resource processing capability of the UE is related to the SCS of the blindly detected CC or cell. That is, the processing capabilities of different SCSs in a slot are different. For details, see Table 1 to Table 3. Table 1 shows the SCS configuration supported by the UE, Table 2 shows the maximum number of PDCCH candidates in each slot when UE is configured with different SCSs in a single cell, and Table 3 is the maximum number of non-overlapping CCEs in each slot when UE is configured with different SCSs in a single cell.

**Table 1**

| μ | $\Delta f=2^{\mu}\cdot 15[\text{kHz}]$ |
|---|---|
| 0 | 15 |
| 1 | 30 |
| 2 | 60 |
| 3 | 120 |

**Table 2**

| μ | Maximum number of monitored PDCCH candidates per slot and per serving cell (Maximum number of monitored PDCCH candidates per slot and per serving cell $M_{\text{PDCCH}}^{\text{max,slot,}\mu}$ ) |
|---|---|
| 0 | 44 |
| 1 | 36 |
| 2 | 22 |
| 3 | 20 |

**Table 3**

| μ | Maximum number of non-overlapped CCEs per slot and per serving cell (Maximum number of non-overlapped CCEs per slot and per serving cell $C_{\text{PDCCH}}^{\text{max,slot,}\mu}$ ) |
|---|---|
| 0 | 56 |
| 1 | 56 |
| 2 | 48 |
| 3 | 32 |

In addition, in order to reduce the implementation complexity of the UE, the NR system stipulates the DCI size budget (size budget) of the UE, that is, stipulates that for each scheduled cell, the maximum number of DCI formats of different sizes that the UE can monitor is 4, and the maximum number of DCI formats of different sizes in USS is 3.

When the UE is configured with CAs of multiple cells, the UE groups the cells according to the μ (that is, SCS) of the scheduling cell, and PDCCH control resource processing capabilities of the UE are allocated among the groups. In addition, the UE can also report the maximum blind detection capability supported by the CA, and if the number of cells configured for the UE $N_{\text{cells}}^{\text{DL,}\mu}$ exceeds the value reported by the UE $N_{\text{cells}}^{\text{cap}}$ , it is necessary to allocate the maximum number of PDCCH candidates $M_{\text{PDCCH}}^{\text{total,slot,}\mu}=\left\lfloor N_{\text{cells}}^{\text{cap}}\cdot M_{\text{PDCCH}}^{\text{max,slot,}\mu}\cdot N_{\text{cells}}^{\text{DL,}\mu}/\sum_{j=0}^{3} N_{\text{cells}}^{\text{DL,}j}\right\rfloor$ and the maximum number of non-overlapping CCEs $C_{\text{PDCCH}}^{\text{total,slot,}\mu}=\left\lfloor N_{\text{cells}}^{\text{cap}}\cdot C_{\text{PDCCH}}^{\text{max,slot,}\mu}\cdot N_{\text{cells}}^{\text{DL,}\mu}/\sum_{j=0}^{3} N_{\text{cells}}^{\text{DL,}j}\right\rfloor$ of the UE according to the number of cells in different groups.

For example: assume that the maximum blind detection capability supported by the UE is $N_{\text{cells}}^{\text{cap}}=4$ , which means that the UE supports at most 4 cells of the maximum control resource processing capabilities $M_{\text{PDCCH}}^{\text{max,slot,}\mu}$ and/or

$C_{PDCCH}^{max,slot,\mu}$. For non-carrier aggregation limited case (NON-CA limited case): 3 cells are divided into group 0 and group 1 according to the SCSs of the scheduling cells. Since there are only 3 cells at this time and the maximum blind detection capability is not exceeded, the maximum PDCCH control resource processing capability assigned to each scheduled cell in each group is the maximum PDCCH control resource processing capability corresponding to the SCS of the scheduling cell.

For the carrier aggregation limited case (CA limited case), since 5 cells are configured, the maximum blind detection capability has been exceeded. These cells are divided into group0, group1 and group2 according to the SCSs of the scheduling cells, and the maximum PDCCH control resource processing capability

$$M_{PDCCH}^{total,slot,\mu} = \left\lfloor N_{cells}^{cap} \cdot M_{PDCCH}^{max,slot,\mu} \cdot N_{cells}^{DL,\mu} / \sum_{j=0}^{3} N_{cells}^{DL,j} \right\rfloor$$

corresponding to each group is calculated, and the maximum PDCCH control resource processing capability corresponding to each scheduled cell in the group is

$$\min(M_{PDCCH}^{max,slot,\mu}, M_{PDCCH}^{total,slot,\mu})$$

, and $\mu$ is a log value corresponding to the SCS of its corresponding scheduling cell.

In order to enhance control channel coverage, PCell is generally deployed on a low-band carrier. On the other hand, low-band carriers have insufficient bandwidth and have been heavily deployed in other standards (such as LTE). At this time, the high-band carrier can be configured as SCell and schedule Pcell is scheduled through SCell to solve the problem of limited PCell control channel capacity and reduce control channel PDCCH overhead.

However, the Release 15 NR system does not support the use of SCell to schedule PCell. Monitoring PDCCH from two scheduling cells at the same time will greatly increase the demodulation complexity and power consumption of the UE, increase the hardware costs of the UE, and is not conducive to the implementation of the UE.

In addition, the PDCCH control resource processing capability allocation of UE in the Release 15 system is grouped according to the SCSs of the scheduling cells. Since a cell only has one scheduling cell (such as self-scheduling, or scheduled by another cell), it can be grouped correctly. However, if a cell is scheduled by two scheduling cells, especially when SCSs of the scheduling cell and the scheduled cell are different, normal grouping cannot be performed, resulting in the UE being unable to allocate the ability to monitor the PDCCH, resulting in communication failure.

With reference to the accompanying drawings, the following describes in detail the method and apparatus in the embodiments of this application based on specific embodiments and application scenarios.

Referring to FIG. 2, an embodiment of the present application provides a method. The execution subject of the method may be a terminal. The specific steps include: step 201 to step 203.

Step 201: The terminal determines a virtual object and/or an object group.

It should be noted that the object includes any of the following:

(1) a cell;
(2) a carrier;
(3) a frequency;
(4) a time domain resource set;
(5) a frequency domain resource set;
(6) a time-frequency domain resource set;
(7) a bandwidth part (Bandwidth Part, BWP); and
(8) a resource pool.

That is, in the solution of the embodiment of this application, the expression of all involved objects may be any one of the above (1) to (8) in the actual application process. For example, the object is a cell.

It should be noted that in the description of subsequent embodiments, for the sake of clarity and convenience, the case that the object is a cell is used as an example. It can be understood that the methods of the embodiments of the present application are also applicable to the case that the object is other content.

Step 202: The terminal determines a control resource processing capability corresponding to the virtual object and/or a control resource processing capability corresponding to the object group based on the determined virtual object and/or object group.

In this embodiment of the present application, the terminal determines the virtual objects and/or object groups according to the objects configured by the network. For example, the terminal obtains multiple objects configured for the terminal on the network side, such as M objects configured by the network, and then determines the virtual objects and/or object groups based on the M objects.

The above-mentioned control resource processing capability can also be interpreted as control resource processing budget, or the maximum number of processed control resources. The processing can be monitoring, detection or blind detection. For example, the control resource budget can also be the blind detection budget of PDCCH or CCE.

The control resource mentioned in this application may be at least one of PDCCH candidates, CCE, CORESET, DCI format, search space, etc. For example, when the control resource is interpreted as PDCCH, the above control resource processing capability is the PDCCH control resource processing capability.

The object group refers to a group associated with a virtual object. The associated group may be a group with only virtual objects, or a group containing virtual objects as well as non-virtual objects or configured objects.

Step 203: The terminal monitors the control resource according to the control resource processing capability.

The virtual object and/or object group is determined according to at least one of the following:

(1) a first object or a self-scheduling resource of the first object; and
(2) a second object or a resource of scheduling the first object by the second object.

The first object is scheduled by at least two objects, and the second object is at least part of the objects that schedule the first object. Optionally, if the object is a cell, for example, the first cell may be Pcell or PScell; the second object may be Scell.

In the embodiment of the present application, the terminal needs to determine the control resource processing capability of the object, to perform subsequent control resource monitoring. Considering that an object may be scheduled by another object or multiple objects (such as self-scheduling and/or scheduled by another object), the virtual object is determined according to the first object and/or the second object (or the resources used for scheduling of the two), and the control resource processing capability is determined for the virtual object.

In the embodiment of the present application, the first object scheduled by at least two objects and/or the second object that schedules the first object is defined as a virtual object, and the control resource processing capability of the virtual object is determined to realize that in a scenario in which one cell is scheduled by two scheduling cells, the UE can allocate the ability to monitor the PDCCH to prevent communication failure.

It should be noted that, taking the virtual object as a virtual cell as an example, the virtual cell is the serving cell. This application creates the concept of virtual cell to distinguish for convenience of naming, but in essence it can be the concept of the serving cell defined by the current protocol. Similarly, when a virtual object is interpreted as a virtual carrier or virtual BWP or a virtual resource pool or a virtual time-frequency resource, one possibility is that the virtual object itself is one or more carriers or BWPs or resource pools or time-frequency resources.

In a possible implementation, the determining a control resource processing capability corresponding to the virtual object and/or a control resource processing capability corresponding to the object group includes:

(1) determining, by the terminal, a total number of objects; and
(2) determining, by the terminal, the control resource processing capability corresponding to the virtual object and/or the control resource processing capability corresponding to the object group based on the total number of objects.

Specifically, the determining, by the terminal, the control resource processing capability corresponding to the virtual object and/or the control resource processing capability corresponding to the object group based on the total number of objects includes:

(2.1) The terminal compares the total number of objects with the maximum processing number; the maximum processing number is used to represent the terminal's maximum processing capability. For example, the maximum processing number can be the terminal's maximum blind detection capability $Y = N_{cells}^{cap}$ .

(2.2) determining, by the terminal, the control resource processing capability corresponding to the virtual object and/or the control resource processing capability corresponding to the object group based on a comparison result.

In order to better explain the above method steps, the definition of virtual objects is first described below: the first object or the self-scheduling resource of the first object, and/or the second object or the resource of scheduling the first object by the second object is the virtual object.

In the embodiment of the present application, the first object and/or the second object (or the resources used for scheduling of the two) are corresponding to virtual objects. It should be noted that during the processing, the first object and/or the second object can be processed as a partial object, for example, as 0.5 cells or 0.2 cells, and the corresponding scheduling resources are the same. Therefore, the virtual objects corresponding to the first object and/or the second object may specifically correspond to L virtual objects, and L may be an integer or a fraction.

In a possible implementation, the case of the partial objects can be expressed by object coefficients (or object weighting coefficients). If the objects are cells, they are called cell coefficients (or cell weighting coefficients). Specifically, at least one of resources of the first object, the second object, and an object other than the first object scheduled by the second object has an object coefficient, and the object coefficient is associated with a control resource processing capability corresponding to at least one of the resources of the first object, the second object, and the object other than the first object scheduled by the second object. For example: if the object coefficient is A, it corresponds to the control resource processing capability of A objects or A *the control resource processing capability.

Further, the object coefficient corresponding to the second object and/or the object coefficient corresponding to the resource of the object other than the first object scheduled by the second object includes any one of the following:

(1) a number of objects scheduled by the second object;
(2) a number of objects scheduled by the second object minus a duplication factor; and
(3) a number of objects other than the first object among objects scheduled by the second object.

It should be noted that the following description takes the object as a cell as an example, and the same applies to the case that the object is a carrier, frequency, and other categories.

For example: if the cell coefficient corresponding to the second cell is K, it is understood as K cells for processing:

a. Optionally, K is the number of cells that can be scheduled by the second cell;
b. Optionally, K is the number of cells that can be scheduled in the second cell minus the duplication factor;
c. Optionally, K is the number of cells other than the first cell among the cells that can be scheduled by the second cell.

Furthermore, the definition of virtual objects can be divided into the following methods:

Method 1: The first object (abbreviated as cell-1 for convenience) or self-scheduling resource of the first object, and the second object (abbreviated as cell-2 for convenience) or the resource for scheduling the first object by the second object, corresponding to the first virtual object (abbreviated to vcell for convenience); specifically corresponding to processing of L vcells, where L can be an integer or a fraction.

Method 2: The first object or self-scheduling resource of the first object, corresponding to the second virtual object (abbreviated as vcell1 for convenience); specifically corresponding to processing of L1 vcells, where L1 can be an integer or a fraction.

Method 3: The second object or the resource for scheduling the first object by the second object, corresponding to the third virtual object (abbreviated as vcell2 for convenience); specifically corresponding to processing of L2 vcells, where L2 can be an integer or a fraction.

It should be noted that the " 1" and "2" in the above-mentioned cell-1 and cell-2 are not the numbers of specific cells, but marks made for differentiation, which can be compared to "first" and "second" in the first object and the second object.

Specifically, for method 1, the UE processes cell-1 or cell-1 self-scheduling (or its corresponding control resource processing capability or budget), and cell-2 or cell-2 scheduling cell-1 (or its corresponding control resource processing capability or budget) as L virtual cells vcell.

a) Optionally, L=1.
For example, cell-1 self-scheduling and cell-2 scheduling cell-1 are regarded as a virtual cell.
b) Optionally, L=L1+L2.
For example, cell-1 self-scheduling and cell-2 scheduling cell-1 are regarded as L virtual cells.
c) Optionally, L=L1+L2-n1; n1 is the duplication factor, indicating the overlapping counting part of L1 and L2.

Optionally, in an implementation, n1=1.

It should be noted that the above example of the calculation process is for the case where there is only one cell-1 and one cell-2. In actual application scenarios, there may be multiple cell-1, and each cell-1 corresponds to multiple cell-2. In this case, accumulation needs to be performed during calculation. Specifically, the corresponding cell-1 and one or more cell-2 can be divided into a group, one 1 is calculated, and then one 1 can be calculated for the corresponding group of each cell-1, and these 1s are accumulated to determine the number L of vcells corresponding to cell-1 and cell-2.

Specifically, for method 2, the UE processes cell-1 or cell-1 self-scheduling (or its corresponding control resource processing capability or budget) as L1 (L1 may be an integer or a fraction) virtual cells vcell1.

a) Optionally, at the same time, cell-1 may also be processed as one or more cells (such as a self-scheduling cell) or some cells (such as some self-scheduling cells), and/or processed as a cell (such as scheduled cell) or some cells (such as some scheduled cells) with cell-2 as a scheduling cell. The virtual cells are additionally defined cells, and therefore some monitoring times will be repeatedly counted. For example, the self-scheduled part of cell-1 may be calculated once in the virtual cell, and may be calculated again in the self-scheduling part corresponding to cell-1.

i. The corresponding cell coefficient is A, which is understood as A cells for processing.

ii. If there are multiple cell-1, the cell weighting coefficient corresponding to cell-1,i in multiple cell-1 is Ai. Ai may be greater than 1 or less than or equal to 1, and can be an integer or a fraction without any restriction.

Specifically, for method 3, the UE processes cell-2 or cell-2 scheduling cell-1 (or its corresponding control resource processing capability or budget) as L2 (L2 may be an integer or a fraction) virtual cells vcell2.

i. Optionally, at the same time, cell-2 may also be treated as one or more cells (for example, scheduling cells) or some cells (for example, some scheduling cells) with cell-1 as the scheduled cell.

i-1. For example, cell-2 can self-schedule, and schedule cell-1 and cell-3. Assume that the part of cell-2 scheduling cell-1 is considered as vcell2. Optionally, the part of cell-2 scheduling cell-2 and the part of cell-2 scheduling cell-3 can be processed as Z scheduled cells or some scheduled cells, such as 2 cells. Further, if there is a duplication factor n', it can be processed as 2-n' scheduled cells or some scheduled cells.

i-2. The corresponding cell coefficient is B, which is understood as B cells for processing.

Optionally, B is the number of cells that cell-2 can schedule.

Optionally, B is the number of cells that cell-2 can schedule minus the duplication factor.

Optionally, B is the number of cells other than cell-1 among the cells that cell-2 can schedule.

i-3. If there are multiple cell-2, the cell weighting coefficient corresponding to cell-2,j in multiple cell-2 is Bj. Bj may be greater than 1 or less than or equal to 1, and can be an integer or a fraction without any restriction.

ii. Optionally, cell-2 may also be processed as one or more cells (for example, a scheduling cell) or some cells (for example, some scheduling cells), for example, cell-2 self-scheduling and/or the part of cell-2 scheduling cell-1 and other cells except cell-2 are processed as one cell or some cells.

ii-1. For example, cell-2 can self-schedule, and schedule cell-1 and cell-3. Assume that the part of cell-2 scheduling cell-1 is considered as vcell2. Optionally, the part of cell-2 scheduling cell-2 and the part of cell-2 scheduling cell-3 can be processed as X scheduled cells or some scheduled cells, such as 1 cell. Optionally, the part of cell-2 scheduling cell-1 can be processed as some scheduling cells, such as 1 cell.

ii-2. The corresponding cell coefficient is C, which is understood as C cells for processing.

Optionally, C is the number of cells that cell-2 can schedule.

Optionally, C is the number of cells that cell-2 can schedule minus the duplication factor.

Optionally, C is the number of cells other than cell-1 among the cells that cell-2 can schedule.

ii-3. If there are multiple cell-2, the cell weighting coefficient corresponding to cell-2,k in multiple cell-2 is Ck. Ck may be greater than 1 or less than or equal to 1, and can be an integer or a fraction without any restriction.

Similarly, the control resource processing capabilities corresponding to the virtual object can be defined based on the control resource processing capabilities corresponding to the first object and/or the second object.

Specifically, it can be divided into the following methods:

method 1: a control resource processing capability corresponding to the first object or a control resource processing capability corresponding to the self-scheduling resource of the first object, and a control resource processing capability corresponding to the second object or a control resource processing capability corresponding to the resource of scheduling the first object by the second object is a control resource processing capability corresponding to the first virtual object;

method 2: a control resource processing capability corresponding to the first object or a control resource processing capability corresponding to the self-scheduling resource of the first object is a control resource processing capability corresponding to the second virtual object; and

method 3: a control resource processing capability corresponding to the second object or the resource of scheduling the first object by the second object is a control resource processing capability corresponding to the third virtual object.

For corresponding explanations, refer to the contents of the virtual object definition section above, which will not be repeated here.

In a possible implementation, the method further includes: the terminal obtains an object. Specifically, the terminal obtains multiple objects configured on the network side.

The following describes the classification method of objects obtained by the terminal:
The obtained objects include: first-type objects and/or second-type objects.

Classification method 1 is adopted: the first-type objects are virtual objects (see the definition of virtual objects above for details), and the second-type objects are configured objects; the configured objects refer to the objects actually configured for the terminal on the network side.

Alternatively, classification method 2 is adopted: the first-type objects are virtual objects, and the second-type objects are non-virtual objects.

It should be noted that the following description takes the object as a cell as an example, and the same applies to the case that the object is a carrier, frequency, and other categories.

Specifically, for classification method 1, cells are divided into configured cells + virtual cells.

1. The first-type cell is explained as: virtual cell, represented by V
2. The second type is explained as: configured cell (configured cell), represented by C.
3. Classification method 1 may cause the same cell to be repeatedly calculated in two types of cells, or the two types of cells may overlap. Furthermore, in the subsequent calculation process, the duplication factor needs to be subtracted to eliminate one item, for example, cell-2 scheduling in cell-2.

Specifically, for classification method 2, cells are divided into non-virtual cells + virtual cells.

1. The first-type cell is explained as: virtual cell, represented by V
For example, one or more cells that can be scheduled by M (M>=2) cells among all configured cells are virtual cells. Further optionally, each such cell can be equivalent to M virtual cells.
2. The second-type cell is explained as: non-virtual cell, represented by Non-V.
For example, one or more cells that are scheduled by only one cell among all configured cells are non-virtual cells.
3. Classification method 2 will not cause the same cell to be calculated twice in the two types of cells, in other words, the two types of cells will not overlap.

Similarly, the control resource processing capabilities corresponding to the obtained objects can also be classified using the above classification method.
Specifically, it can be divided into the following methods:

classification method 1 is adopted: the control resource processing capability corresponding to the first-type object is the control resource processing capability corresponding to the virtual object, and the control resource processing capability corresponding to the second-type object is the control resource processing capability corresponding to the configured object; and
classification method 2 is adopted: the control resource processing capability corresponding to the first-type object is the control resource processing capability corresponding to the virtual object, and the control resource processing capability corresponding to the second-type object is the control resource processing capability corresponding to the non-virtual object.

For corresponding explanations, refer to the content of the classification method of the obtained objects mentioned above, which will not be repeated here.
In a possible implementation, for a defined virtual object, there is an SCS for the virtual object or the control resource processing capability corresponding to the virtual object. The reference SCS includes any of the following:

(1) an SCS of a first object or a self-scheduling resource of the first object;
(2) an SCS of a second object or a resource of scheduling the first object by the second object;
(3) the largest SCS of the SCS of the first object or the self-scheduling resource of the first object and the SCS of the second object or the resource of scheduling the first object by the second object;
(4) the smallest SCS of the SCS of the first object or the self-scheduling resource of the first object and the SCS of the second object or the resource of scheduling the first object by the second object;
(5) the weighted sum of the SCS of the first object or the self-scheduling resource of the first object and the SCS of the second object or the resource of scheduling the first object by the second object;
(6) an SCS of a control resource processing capability corresponding to the first object or a control resource processing capability corresponding to the self-scheduling resource of the first object;
(7) an SCS of a control resource processing capability corresponding to the second object or a control resource processing capability corresponding to the resource of scheduling the first object by the second object;
(8) the largest SCS of the SCS of the control resource processing capability corresponding to the first object or the control resource processing capability corresponding to the self-scheduling resource of the first object and the SCS of the control resource processing capability corresponding to the second object or the resource of scheduling the first object by the second object;
(9) the smallest SCS of the SCS of the control resource processing capability corresponding to the first object or the control resource processing capability corresponding to the self-scheduling resource of the first object and the SCS of the control resource processing capability corresponding to the second object or the resource of scheduling the first object by the second object;
(10) the weighted sum of the SCS of the control resource processing capability corresponding to the first object or the control resource processing capability corresponding to the self-scheduling resource of the first object and the SCS of the control resource processing capability corresponding to the second object or the resource of scheduling the first object by the second object;

(11) a predefined SCS; and

(12) a configured SCS.

Further, at least two of the first virtual object, the second virtual object, and the third virtual object have the same reference SCS, and/or at least two of the control resource processing capabilities corresponding to the first virtual object, the second virtual object, and the third virtual object correspond to the same reference SCS.

It should be noted that the following description takes the object as a cell as an example, and the same applies to the case that the object is a carrier, frequency, and other categories.

A. The first-type cells (such as virtual cells (at least one of vcell, vcell1, vcell2)) or the control resource processing capabilities or budgets corresponding to the first-type cells have corresponding reference SCS:

Case 1. It is specified that vcell, vcell1, and vcell2 correspond to the same reference SCS.

1. The reference SCS can be cell-1 SCS, cell-2 SCS, max (cell-1 SCS, cell-2 SCS), min (cell-1 SCS, cell-2 SCS), or predefined SCS. Preferably, the reference SCS can be cell-1 SCS.

1-a. For example, it is specified that the SCS of Vcell, vcell1, and vcell2 can be cell-1 SCS.

2. Preferably, this method is used when cell-1 SCS < cell-2 SCS. Further optionally, refer to SCS=cell-1 SCS.

Case 2. The reference SCSs corresponding to vcell1 and vcell2 may be different.

For example, it is specified that the reference SCS is the SCS of the corresponding scheduling cell, then the reference SCS corresponding to vcell1 is cell-1 SCS, and the SCS corresponding to vcell-2 is cell-2 SCS. When cell-1 SCS and cell-2 SCS are different, reference SCSs corresponding to vcell1 and vcell2 are different.

B. The reference SCS corresponding to the second-type cell or the control resource processing capability or budget corresponding to the second-type cell is the SCS of the corresponding scheduling cell:

For example, cell-3 is only scheduled by cell-3 and the SCS of cell-3 is 60kHz. Then, the reference SCS of cell-3 is 60kHz.

In a possible implementation, the method further includes:

determining, by the terminal, that objects corresponding to the same reference SCS belong to the same object group, or determining, by the terminal, that control resource processing capabilities corresponding to objects corresponding to the same reference SCS belong to the same object group.

According to the grouping method, the details are as follows:

Grouping method 1 (or can also be called unified grouping): determining, by the terminal based on a reference SCS corresponding to the obtained object or a reference SCS corresponding to a control resource processing capability corresponding to the obtained object, that the objects corresponding to the same reference SCS belong to the same target object group, or determining that control resource processing capabilities corresponding to objects corresponding to the same reference SCS belong to the same target object group.

In the embodiment of this application, the UE groups all cells (such as all first and second types) or the control resource processing capabilities or budgets corresponding to all cells according to their corresponding reference SCSs ($\mu$), and the obtained group is called unified group. It should be noted that the $\mu$ can be calculated by the formula $\mu=\text{Log}_2$ (refer to SCS/15kHz).

It should be noted that in this grouping method, there to be both first-type cells and second-type cells in a group. For example, when a virtual cell and a non-virtual cell have the same reference SCS, they will be assigned to one group.

If the reference SCS of vcell2 is different from the SCS of cell-2, in this grouping method, the control resource processing capability or budget corresponding to cell-2 scheduling cell-1 and the control resource processing capability or budget corresponding to cell-2 self-scheduling are assigned into different unified groups.

Grouping method 2 (or can also be called grouping by type): the terminal determines, based on the reference SCS corresponding to the first-type object or the reference SCS corresponding to the control resource processing capability corresponding to the first-type object, that first-type objects corresponding to the same reference SCS belong to the same first-type object group; or determines that the control resource processing capabilities corresponding to the first-type objects corresponding to the same reference SCS belong to the same first-type object group; and/or the terminal determines, based on the reference SCS corresponding to the second-type object or the reference SCS corresponding to the control resource processing capability corresponding to the second-type object, that the second-type object corresponding to the same reference SCS belong to the same second-type object group, or determines that the control resource processing capabilities corresponding to the second-type objects corresponding to the same reference SCS belong to the same second-type object group.

It should be noted that the following description takes the object as a cell as an example, and the same applies to the case that the object is a carrier, frequency, and other categories.

In this embodiment of the present application, the UE groups the first-type cells (such as virtual cells (at least one of vcell, vcell1, vcell2)) or the control resource processing capabilities or budgets corresponding to or the first-type cells according to the corresponding reference SCSs ($\mu$), or the UE believes that the control resource processing capabilities or budgets corresponding to the virtual cells (at least one of vcell, vcell1, vcell2) or the first-type cells belong to the first-type cell group (for example, virtual cell grouping) corresponding to the reference SCS ($\mu$). The obtained group is called a first-type cell group; and the UE groups the second-type cells or the control resource processing capabilities or budgets corresponding to the second-type cells according to the corresponding references SCS ($\mu$). The obtained group is called the second-type cell group.

In a possible implementation, in a case that the second-type object is a configured object, the determining, by the terminal, that second-type objects corresponding to the same reference SCS belong to the same second-type object group includes:

determining, by the terminal, that among configured objects, objects corresponding to the same reference SCS other than a first excluded object belong to the same second-type object group.

In a case that the second-type object is a configured object, the determining, by the terminal, that the control resource processing capabilities corresponding to the second-type objects corresponding to the same reference SCS belong to the same second-type object group includes:

determining, by the terminal, that among the control resource processing capabilities corresponding to the configured objects, the control resource processing capabilities corresponding to the objects corresponding to the same reference SCS other than a control resource processing capability corresponding to a first excluded object belong to the same second-type object group;
where the first excluded object includes at least one of the following:

a first object or a self-scheduling resource of the first object; and
a second object or a resource of scheduling the first object by the second object.

In the embodiment of the present application, the grouping the second-type cells or the control resource processing capabilities or budgets corresponding to the second-type cells according to the corresponding references SCS ($\mu$) also includes: the UE groups the configured cells according to SCSs of their corresponding scheduling cells, or the UE groups the portion of the configured cells excluding at least one of the following according to the SCSs of the corresponding scheduled cells, thereby determining the configured cell group:

i. cell-1 or cell-1 self-scheduling (or its corresponding control resource processing capability or budget); and
ii. Cell-2 or cell-2 schedules cell-1 (or its corresponding control resource processing capability or budget).

It should be noted that this grouping method allows the first-type cells and the second-type cells to be grouped independently and not in one group.

In this grouping method, when the first and second types overlap (classification method 1), the grouping of configured cells can be called configured cell grouping, and the grouping of virtual cells can be called virtual cell grouping.

In this grouping method, when the first and second types do not overlap (classification method 2), the grouping of non-virtual cells can be called non-virtual cell grouping, and the grouping of virtual cells can be called virtual cell grouping.

The specific process of controlling resource processing capabilities is described below:
The terminal determines the total number of objects, including: the terminal determines the total number of objects based on at least one of the number of first-type objects, the number of second-type objects, and the size of the object group (referring to the number of objects in the group).

The specific descriptions are as follows.

determining, by the terminal, the total number of objects based on the total number of first-type objects and/or the total number of second-type objects;
where the total number of first-type objects is determined according to the number of first-type objects or the size of the first-type object group; and/or the total number of second-type objects is determined according to the number of second-type objects or the second-type object group.

It should be noted that the following description takes the object as a cell as an example, and the same applies to the case that the object is a carrier, frequency, and other categories.

The size of an object or object group is determined as follows:

i. If there is a first-type cell corresponding to the reference SCS, the number of first cells corresponding to the reference SCS is expressed as $G_{cells}^{DL,\mu,V}$ .

i-1. It should be noted that the number of first cells is applicable to both grouping method 1 and grouping method 2.

i-2. One implementation method is $G_{cells}^{DL,\mu,V}=L$ or L1 + L2 or L1 + L2 - n3. See the explanation above, which can be understood as LL1 L2 corresponding to cell-1 and cell-2 corresponding to the reference SCS.

In a possible implementation, determining, by the terminal, the total number of objects also includes: removing, by the terminal, the duplication factor from the number of first-type objects, the number of second-type objects, or the size of the object group; or removing, by the terminal, the duplication factor from the total number of objects.

Specifically, n3 is a duplication factor. The purpose of the duplication factor is to remove the repetitive calculation part. The repetitive part can be removed in advance when calculating the number of the first type, or subtracted in advance when calculating the number of the second type, or can be subtracted when calculating the total number. Here, it is subtracted when calculating the number of the first type.

It should be noted that the above-mentioned specific method of removing duplication factor may be: directly subtracting the duplication factor, or the specific method may also be: multiplying by a coefficient corresponding to the repeated calculation part. For example: the total number is 10, and the number of repeated calculation is 2, and then the way to remove repeated factors can be 10-2, or it can be 10×0.8. In the subsequent embodiments of the present application, the method of subtracting the duplication factor is used for explanation. It can be understood that the method of multiplying the coefficient is also applicable and achieves the same effect of removing the duplication factor.

ii. If there is a first-type cell group corresponding to the reference SCS, the size of the first-type cell group corresponding to the reference SCS (can be interpreted as the number of first-type cells it contains, such as the number of virtual cells) is $G_{cells}^{DL,\mu,V}$ .

ii-1. It should be noted that the size of the first-type cell group is applicable to both grouping method 1 and grouping method 2, and is preferably applicable to grouping method 2.

ii-2. One implementation method is $G_{cells}^{DL,\mu,V}=L$ or L1 + L2 or L1 + L2 - n3, which can be understood as LL1 L2 corresponding to cell-1 and cell-2 corresponding to the reference SCS.

iii. If there is a second-type cell corresponding to the reference SCS, the number of second cells corresponding to the reference SCS (can be interpreted as the number of second-type cells it contains) is $N_{cells}^{DL,\mu}$ .

iii-1. If the second-type cell is a configured cell, the number is further represented by $N_{cells}^{DL,\mu,C}$ .

iii-1-a. Further optionally, $N_{cells}^{DL,\mu,C}$ is the total number of configured cells corresponding to the SCS, that is, - n3, for example, there are 3 configured cells corresponding to the SCS, n3 is the duplication factor = 1. Then, it is actually considered that there are 3-1=2 configured cells corresponding to the SCS, that is, $N_{cells}^{DL,\mu,C}=3-1=2$ .

iii-2. If the second-type cell is a non-virtual cell, the number is further represented by $N_{cells}^{DL,\mu,non\_V}$ .

iii-3. In this case, this item is true regardless of whether grouping method 1 or method 2 is used.

iv. If there is a second-type cell group corresponding to the reference SCS, the size of the second-type cell group corresponding to the reference SCS (can be interpreted as the number of second-type cells it contains) is $N_{cells}^{DL,\mu}$ .

iv-1. If the second-type cell is a configured cell, the number is further represented by $N_{cells}^{DL,\mu,C}$ .

iv-1-a. Further optionally, $N_{cells}^{DL,\mu,C}$ is the total number of configured cells corresponding to the SCS, that is, -n3.

iv-2. If the second-type cell is a non-virtual cell, the number is further represented by $N_{cells}^{DL,\mu,non\_V}$ .

iv-3. This item is only true when grouping method 2 is adopted.

Further, the method for calculating the total number T of objects is as follows:

Calculation method 1: $\quad T=\sum_{\mu=0}^{Z} (N_{cells}^{DL,\mu}+G_{cells}^{DL,\mu,V})$ , or $\quad T=\sum_{\mu=0}^{Z} (N_{cells}^{DL,\mu}+G_{cells}^{DL,\mu,V}-n^{\mu})$ , or

$$T=\sum_{\mu=0}^{Z} (N_{cells}^{DL,\mu}+G_{cells}^{DL,\mu,V})-n4$$ ; where V represents virtual.

Optionally, this item is used when using grouping method 1.

$n^{\mu}$ is the duplication factor corresponding to the reference SCS ($\mu$).

n4 is the duplication factor or the total duplication factor (for example, the sum of the duplication factors corresponding to all reference SCSs). The repeated part can be subtracted in advance when calculating the number of first-type objects or the size of the first-type object group, or subtracted in advance when calculating the number of second-type objects or the size of the second-type object group, or can be subtracted when calculating the total number of objects. Here, it is subtracted when calculating the total number. When calculating the number of first-type objects or the size of the first-type object group or the number of second-type objects or the size of the second-type object group, it is not subtracted.

Calculation method 2: T=T1+T2;

$$T1=\sum_{\mu=0}^{Z} N_{cells}^{DL,\mu}, \text{ or } \sum_{\mu=0}^{Z} (N_{cells}^{DL,\mu}-n^{\mu}), \text{ or } \sum_{\mu=0}^{Z} N_{cells}^{DL,\mu}-n4;$$

$$T2=\sum_{\mu=0}^{Z'} G_{cells}^{DL,\mu,V}, \text{ or } \sum_{\mu=0}^{Z} (N_{cells}^{DL,\mu,V}-n^{\mu}), \text{ or } \sum_{\mu=0}^{Z'} G_{cells}^{DL,\mu,V}-n4.$$

Optionally, this item is used when using grouping method 2.

$n^{\mu}$ is the duplication factor corresponding to the reference SCS.

n4 is the duplication factor or the total duplication factor.

Example 1: $\quad T=\sum_{\mu=0}^{Z} N_{cells}^{DL,\mu} + \sum_{\mu=0}^{Z'} G_{cells}^{DL,\mu,V}$ , preferably, this method is suitable for the case that classification method 2 is used. At this time, $N_{cells}^{DL,\mu}$ is actually $N_{cells}^{DL,\mu,non-V}$ , V means virtual, and non-V means non-virtual.

Since the first and second types of cells do not overlap at this time, there is no need to subtract the duplication factor.

Example 2: $\quad T=\sum_{\mu=0}^{Z} N_{cells}^{DL,\mu} + \sum_{\mu=0}^{Z'} (N_{cells}^{DL,\mu,V}-n^{\mu})$ , or $\quad T=\sum_{\mu=0}^{Z} N_{cells}^{DL,\mu} + \sum_{\mu=0}^{Z'} G_{cells}^{DL,\mu,V}-n4$ , preferably, this method is suitable for the case that classification method 1 is used. In this case, $N_{cells}^{DL,\mu}$ is actually $N_{cells}^{DL,\mu,C}$ .

Since the first and second types of cells may overlap at this time, the duplication factor needs to be subtracted.

Z is the $\mu$ corresponding to the maximum supported SCS, and Z' is the $\mu$ corresponding to the maximum supported reference SCS.

It should be noted that, for example, if there are multiple cell-1 and their corresponding cell-2, and some cell-1 and their corresponding cell-2 have different reference SCSs. In this case, they will be divided into multiple different virtual groups, and the total number of virtual cells needs to be calculated through accumulation, that is, the number of each group is first calculated according to the above method, and then accumulated to obtain the total number of virtual cells.

Further, determining, by the terminal, the control resource processing capabilities corresponding to the virtual objects and/or the control resource processing capabilities corresponding to object groups including at least one of the following:

(1) in a case that the total number of objects is not greater than the maximum processing number, or in a case that the total number of objects minus the first duplication factor is not greater than the maximum processing number, determining, by the terminal, that the control resource processing capability is a first capability (that is, capability 1);

(2) in a case that the total number of objects is greater than the maximum processing number, or in a case that the total number of objects minus the second duplication factor is greater than the maximum processing number, determining, by the terminal, that the control resource processing capability is a second capability (that is, capability 2); and

(3) in a case that the total number of objects is greater than the maximum processing number, or in a case that the total number of objects minus the third duplication factor is greater than the maximum processing number, determining, by the terminal, that the control resource processing capability is a third capability (that is, capability 3).

It should be noted that the following description takes the object as a cell as an example, and the same applies to the case that the object is a carrier, frequency, and other categories. The first capability, second capability and third capability may be the control resource processing capability corresponding to the first-type cell or the first-type cell group, or the control resource processing capability corresponding to the second-type cell or the second-type cell group, both of which are applicable. In the following specific examples, it is assumed that the first capability, the second capability and the third capability are the control resource processing capabilities corresponding to the first-type cell or the first-type cell group.

The above scenario where the total number of objects is not greater than the maximum processing number can correspond to case1-non CA limited, and the scenario where the total number of objects is greater than the maximum processing number can correspond to case2-CA limited.

Specifically, for case1-non CA limited:

If the total number T of the second-type cells (such as configured cells or non-virtual cells) and at least part of the first-type cells (such as virtual cells (at least one of vcell, vcell1, vcell2)) does not exceed the maximum processing capability of the UE (the maximum processing capability can be the maximum number of cells, for example, the number of cells supported by the UE according to the maximum control resource processing capability, that is, the maximum blind detection capability $Y=N_{cells}^{cap}$), or the total number T-n2 of second-type cells (such as configured cells or non-virtual cells) and at least part of the first-type cells (such as virtual cells (at least one of vcell, vcell1, vcell2)) does not exceed the maximum processing capability of the UE (for example, the number of cells supported by the UE according to the maximum control resource processing capability, that is, for example, the maximum blind detection capability $Y=N_{cells}^{cap}$), it is determined that the corresponding maximum control resource processing capability of the first-type cell (for example, virtual cell) is capability 1.

For example: the number of configured cells is N, there are L virtual cells, and N+L<=Y. Then, it is non CA limited case, and capability 1 is the capability corresponding to non CA limited case.

For example: the number of non-virtual cells is N, there are L1+L2 virtual cells, and N+L1+L2-n2<=Y. Then, it is non CA limited case, capability 1 is the capability corresponding to non CA limited case; and n2 is duplication factor.

Specifically, for case2-CA limited:

If the total number T of the second-type cells (such as configured cells or non-virtual cells) and at least part of the first-type cells (such as virtual cells (at least one of vcell, vcell1, vcell2)) exceeds the maximum processing capability of the UE (for example, the number of cells supported by the UE according to the maximum control resource processing capability, that is, the blind detection capability $Y=N_{cells}^{cap}$), or the total number T-n2 of second-type cells (such as configured cells or non-virtual cells) and at least part of the first-type cells (such as virtual cells (at least one of vcell, vcell1, vcell2)) exceeds the maximum processing capability of the UE (for example, the number of cells supported by the UE according to the maximum control resource processing capability, that is, for example, the maximum blind detection capability $Y=N_{cells}^{cap}$):

it is determined that the maximum control resource processing capability corresponding to the unified group or the first-type cell group (such as a virtual cell group) to which the first-type cell belongs is capacity 2.

Alternatively, it is determined that the maximum control resource processing capability corresponding to the first-type cell (such as a virtual cell) is capability 3.

The method for determining the first-type cell group (such as a virtual cell group) or the unified group to which the first-type cell belongs is as shown above.

For example, the number of configured cells is N, and there are L virtual cells, N+L>Y. Then, it is CA limited case, and capability 2 is the capability corresponding to CA limited case.

For example: the number of non-virtual cells is N, there are L1+L2 virtual cells, and N+L1+L2-n2> Y. Then, it is CA limited case, capability 2 is the capability corresponding to CA limited case; and n2 is duplication factor.

Further, the determining, by the terminal, the maximum control resource processing capability as the first capability includes: the terminal determines the first capability according to the preset control resource processing capability.

Specifically, for a reference SCS ($\mu$), that the maximum control resource processing capability or budget corresponding to the corresponding first-type cell is capability 1 includes at least one of the following:

i. The maximum control resource processing capability corresponding to vcel1 is $R0 \cdot P_{PDCCH}^{max,slot,\mu}$.

ii. The maximum control resource processing capability corresponding to vcell1 is $R1 \cdot P_{PDCCH}^{max,slot,\mu}$ or $R1\,L1 \cdot P_{PDCCH}^{max,slot,\mu}$ or $R1 \cdot (L1/L)\,P_{PDCCH}^{max,slot,\mu}$.

iii. The maximum control resource processing capability corresponding to vcell2 is $R2 \cdot P_{PDCCH}^{max,slot,\mu}$ or $R2\,L2 \cdot P_{PDCCH}^{max,slot,\mu}$ or $R2 \cdot (L2/L)\,P_{PDCCH}^{max,slot,\mu}$.

Optionally, the above R0, R1, and R2 can be integers, fractions, or decimals. They can be configured, specified by the protocol, or reported by the UE. For example, R2= cell-2 SCS/reference SCS or reference SCS/ cell-2 SCS. For example, the maximum control resource processing capability corresponding to vcell2 is R2 (cell-2 SCS/reference SCS) $P_{PDCCH}^{max,slot,\mu}$. $P_{PDCCH}^{max,slot,\mu}$ is the preset control resource processing capability, for example, it can be the maximum number of PDCCH candidates $M_{PDCCH}^{max,slot,\mu}$ or the maximum number $C_{PDCCH}^{max,slot,\mu}$ of non-overlapping CCEs, and $\mu$ corresponds to the reference SCS;

Further, determining, by the terminal, the maximum control resource processing capability as the second capability includes: determining, by the terminal, the second capability based on a preset control resource processing capability, the maximum processing number, the size of the object group, and the total number of objects.

Specifically, for a reference SCS ($\mu$), that the maximum control resource processing capability or budget corresponding to the unified group to which its corresponding first-type cells belong or its corresponding first-type cell group is capacity 2 includes one of the following:

i. The maximum control resource processing capability corresponding to the unified group to which the first-type cells belongs or the first-type cell group is $P_{PDCCH}^{total,slot,\mu}$.

$$P_{PDCCH}^{total,slot,\mu}=\left\lfloor R3 * N_{cells}^{cap} \cdot P_{PDCCH}^{max,slot,\mu} \cdot G_{cells}^{DL,\mu,V}/T \right\rfloor$$

, where $P_{PDCCH}^{max,slot,\mu}$ is the preset control resource processing capability, for example, it can be $M_{PDCCH}^{max,slot,\mu}$ or $C_{PDCCH}^{max,slot,\mu}$, and $\mu$ corresponds to the reference SCS.

Optionally, this method is to calculate the capacity of the first-type cell group based on the size of the first-type cell group, which is suitable for calculating the maximum control resource processing capability corresponding to the corresponding first-type cell group.

However, this does not rule out the possibility that the unified group to which the first-type cells belongs also uses i.

ii. The maximum control resource processing capability corresponding to the unified group to which the first-type cells belongs or the first-type cell group is $P_{PDCCH}^{total,slot,\mu}$.

$$P_{PDCCH}^{total,slot,\mu} = \left\lfloor R4 * N_{cells}^{cap} \cdot P_{PDCCH}^{max,slot,\mu} \cdot ( N_{cells}^{DL,\mu} + G_{cells}^{DL,\mu,V} )/T \right\rfloor,$$

where $P_{PDCCH}^{max,slot,\mu}$ is the preset control resource processing capability, for example, it can be $M_{PDCCH}^{max,slot,\mu}$ or $C_{PDCCH}^{max,slot,\mu}$, and $\mu$ corresponds to the reference SCS. Preferably, at this time, $N_{cells}^{DL,\mu}$ is the number of corresponding non-virtual cells $N_{cells}^{DL,\mu, non\_V}$.

iii. The maximum control resource processing capability corresponding to the unified group to which the first-type cells belongs or the first-type cell group is $P_{PDCCH}^{total,slot,\mu}$.

$$P_{PDCCH}^{total,slot,\mu} = \left\lfloor R5 * N_{cells}^{cap} \cdot P_{PDCCH}^{max,slot,\mu} \cdot ( N_{cells}^{DL,\mu} + G_{cells}^{DL,\mu,V} )/T \right\rfloor ;$$

In a possible implementation, determining, by the terminal, that the control resource processing capability is the second capability includes: removing, by the terminal, the duplication factor from the size of the object group, and determining the second capability based on at least two of the preset control resource processing capability, the maximum processing number, the size of the object group, and the total number of objects; or removing, by the terminal, the duplication factor from the total number of objects, and determining the second capability based on at least two of the preset control resource processing capability, the maximum processing number, the size of the object group, and the total number of objects.

Specifically, $P_{PDCCH}^{total,slot,\mu} = \left\lfloor R5 * N_{cells}^{cap} \cdot P_{PDCCH}^{max,slot,\mu} \cdot ( N_{cells}^{DL,\mu} + G_{cells}^{DL,\mu,V} - n^{\mu} )/T \right\rfloor$, this method is mainly used in a case that subtracting the repeated part is considered in T, but there is no subtraction in the calculation process of $N_{cells}^{DL,\mu}$ and $N_{cells}^{DL,\mu} + G_{cells}^{DL,\mu,V}$; therefore, it is necessary to subtract once when calculating $P_{PDCCH}^{total,slot,\mu}$. $P_{PDCCH}^{max,slot,\mu}$ is the preset control resource processing capability, for example, it can be $M_{PDCCH}^{max,slot,\mu}$ or $C_{PDCCH}^{max,slot,\mu}$, and $\mu$ corresponds to the reference SCS. Preferably, at this time, $N_{cells}^{DL,\mu}$ is the number of corresponding configured cells $N_{cells}^{DL,\mu,C}$.

Optionally, ii-iii is to calculate the capacity of the first-type cell group based on the size of the unified group of the first-type cell, which is suitable for calculating the maximum control resource processing capability corresponding to the unified group of the first-type cell.

However, the possibility of also adopting ii and iii for the first-type cell group cannot be ruled out.

Further, the determining, by the terminal, the maximum control resource processing capability as the third capability includes: the terminal determines the third capability according to the preset control resource processing capability and the second capability.

Specifically, that the corresponding maximum control resource processing capability or budget is capacity 3 includes one of the following:

i. The maximum control resource processing capability corresponding to v cell 1 is

$$\min\left(R6 * P_{PDCCH}^{max,slot,\mu}, R7 * P_{PDCCH}^{total,slot,\mu}\right) \text{ or } \min\left(R10 * Capability\ 1, R7 * P_{PDCCH}^{total,slot,\mu}\right).$$

ii. The maximum control resource processing capability corresponding to vcell2 is

$$\min\left(R8 * P_{PDCCH}^{max,slot,\mu}, R9 * P_{PDCCH}^{total,slot,\mu}\right) \text{ or } \min\left(R11 * Capability\ 1, R9 * P_{PDCCH}^{total,slot,\mu}\right).$$

Optionally, the above R3 to R11 can be integers, fractions, or decimals. They can be configured, specified by the protocol, or reported by the UE. For example, R8= cell-2 SCS/reference SCS or reference SCS/cell-1 SCS.

In a possible implementation, the duplication factor is any of the following:

(1) a preset value;
(2) the number of first objects;
(3) a preconfigured value on the network side;
(4) a value reported by the terminal;
(5) the number of second objects;
(6) the number of second objects corresponding to a specific first object.

Specifically, the duplication factors mentioned above (such as the aforementioned n1, n2, n3, n4, n', $n^{\mu}$ ) are the duplication factors corresponding to the reference SCS, that is, different reference SCSs have different duplication factors, which can also be the total duplication factor.

The method for determining the value of the duplication factor includes: a preset value (such as 0 or 1 or L or L1 or L2 or L1+L2), or the number of cells-1, or the number of cell-2, or configured on the network side value, or a value reported by the UE. Further, the number of cell-1 refers to the number of the duplication factors corresponding to the reference SCS or the number of all cell-1. Further, the number of cell-2 is the number of cell-2 corresponding to a certain cell-1, or the total number of cell-2 corresponding to any cell-1.

The solution of the present application will be described below with reference to specific embodiments. It should be noted that in the following embodiments, the description is based on the case where the object is a cell.

**Embodiment 1**

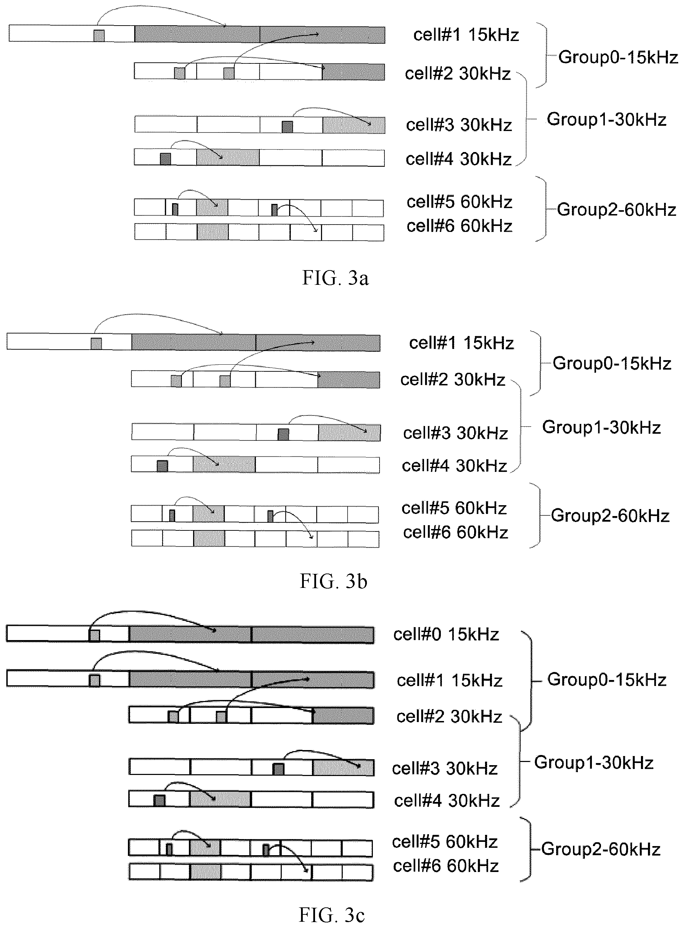

For grouping method 1, see FIG. 3a, and the details are as follows:

1. Maximum CA processing capability supported by UE $\text{UE } N_{cells}^{cap} = 4$ .

2. The network configures 6 cells for UE for CA. Among them, the SCS of cell-1 is 15kHz, the SCS of cell-2/3/4 is 30kHz, and the SCS of cell-5/6 is 60kHz. Among them, cell-1/2/3/4/5 can be self-scheduled, and cell-1 can be scheduled by cell-2, and cell-6 can be scheduled by cell-5. cell-1 can be Pcell. Assume that the reference SCS is cell-1 SCS.

3. The cell weighting coefficient corresponding to the self-scheduling part of cell-2 is 0.2, and there is no duplication factor or the duplication factor is 0.

4. Cell-1 or cell-1 self-scheduling (or its corresponding control resource processing capability or budget), and cell-2 or cell-2 scheduling cell-1 (or its corresponding control resource processing capability or budget) corresponds to 1 virtual cell.

5. Determine the maximum control resource processing capability as follows (taking the maximum number of PDCCH candidates as an example):

a. The number $G_{cells}^{DL,0,V} = L = 1$ of cells in group 0 ($\mu$=0) corresponding to 15kHz (including the part of cell-1 and cell-2 scheduling cell-1), the number $N_{cells}^{DL,1} = 2+0.2 = 2.2$ of cells in group 1 ($\mu$=1) corresponding to 30kHz (including the self-scheduling part of cell-2 and cell-3/4), and the number $N_{cells}^{DL,2} = 2$ of cells in group 2 ($\mu$=2) of 60kHz (including cell-5/6). The total number of cells T=1+2.2+2=5.2.

b. The maximum number of PDCCH candidates for group 0 ($\mu$=0) corresponding to 15kHz is

$$M_{PDCCH}^{total,slot,0} = \left\lfloor N_{cells}^{cap} \cdot M_{PDCCH}^{max,slot,0} \cdot G_{cells}^{DL,0,V} / T \right\rfloor = \lfloor 4 \cdot 44 \cdot 1/5.2 \rfloor = 33$$

, and/or the maximum number of PDCCH candidates for group 1 ($\mu$=1) of 30kHz is

$$M_{PDCCH}^{total,slot,1} = \left\lfloor N_{cells}^{cap} \cdot M_{PDCCH}^{max,slot,1} \cdot N_{cells}^{DL,1} / T \right\rfloor = \lfloor 4 \cdot 36 \cdot 2.2/5.2 \rfloor = 60$$

, and/or the maximum number of PDCCH candidates for group 2 ($\mu$=2) of 60kHz is

$$M_{PDCCH}^{total,slot,2} = \left\lfloor N_{cells}^{cap} \cdot M_{PDCCH}^{max,slot,2} \cdot N_{cells}^{DL,2} / T \right\rfloor = \lfloor 4 \cdot 22 \cdot 2/5.2 \rfloor = 33$$

.

For grouping method 1, see FIG. 3b, and the details are as follows:

1. Maximum CA processing capability supported by UE $N_{cells}^{cap}=4$ .

2. The network configures 6 cells for UE for CA. Among them, the SCS of cell-1 is 15kHz, the SCS of cell-2/3/4 is 30kHz, and the SCS of cell-5/6 is 60kHz. Among them, cell-1/2/3/4/5 can be self-scheduled, and cell-1 can be scheduled by cell-2, and cell-6 can be scheduled by cell-5. cell-1 can be Pcell. Assume that the reference SCS is cell-1 SCS.

3. The cell weighting coefficient corresponding to the self-scheduling part of cell-2 is 1, and there is no duplication factor or the duplication factor is 0.

4. Cell-1 or cell-1 self-scheduling (or its corresponding control resource processing capability or budget), and cell-2 or cell-2 scheduling cell-1 (or its corresponding control resource processing capability or budget) corresponds to 1 virtual cell.

5. Determine the maximum control resource processing capability as follows (taking the maximum number of PDCCH candidates as an example):

a. The number $G_{cells}^{DL,0,V}=L=1$ of cells in group 0 ($\mu$=0) corresponding to 15kHz (including the part of cell-1 and cell-2 scheduling cell-1), the number $N_{cells}^{DL,1}=2+1=3$ of cells in group 1 ($\mu$=1) corresponding to 30kHz (including the self-scheduling part of cell-2 and cell-3/4), and the number $N_{cells}^{DL,2}=2$ of cells in group 2 ($\mu$=2) of 60kHz (including cell-5/6). The total number of cells T=1+3+2=6.

b. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot G_{cells}^{DL,0,V}/T\rfloor=\lfloor 4\cdot44\cdot1/6\rfloor=29$$ , and/or the maximum number of PDCCH candidates for group 1 ($\mu$=1) of 30kHz is $M_{PDCCH}^{total,slot,1}=\lfloor N_{cells}^{cap}\cdot M_{PDCCH}^{max,slot,1}\cdot N_{cells}^{DL,1}/T\rfloor=\lfloor 4\cdot36\cdot3/6\rfloor=72$ , and/or the maximum number of PDCCH candidates for group 2 ($\mu$=2) of 60kHz is

$$M_{PDCCH}^{total,slot,2}=\lfloor N_{cells}^{cap}\cdot M_{PDCCH}^{max,slot,2}\cdot N_{cells}^{DL,2}/T\rfloor=\lfloor 4\cdot22\cdot2/6\rfloor=29$$ .

**Embodiment 2**

For grouping method 1, see FIG. 3c, and the details are as follows:

1. Maximum CA processing capability supported by UE $N_{cells}^{cap}=4$ .

2. The network configures 7 cells for UE for CA. Among them, the SCS of cell-0/1 is 15kHz, the SCS of cell-2/3/4 is 30kHz, and the SCS of cell-5/6 is 60kHz. Among them, cell -0/1/2/3/4/5 can be self-scheduled, and cell-1 can be scheduled by cell-2, and cell-6 can be scheduled by cell-5. cell-1 can be Pcell. Assume that the reference SCS is cell-1 SCS.

3. The cell weighting coefficient corresponding to the self-scheduling part of cell-2 is 1, and the duplication factor n3=1.

4. Cell-1 or cell-1 self-scheduling (or its corresponding control resource processing capability or budget) corresponds to 1 virtual cell, and cell-2 or cell-2 scheduling cell-1 (or its corresponding control resource processing capability or budget) corresponds to 1 virtual cell, and the duplication factor n3=1.

5. Determine the maximum control resource processing capability as follows (taking the maximum number of PDCCH candidates as an example):

a. The number of cells in unified group 0 ($\mu$=0) corresponding to 15kHz is $N_{cells}^{DL,0}+G_{cells}^{DL,0,V}-n3=1+1+1-n3=2$ , the number of cells in group 1 ($\mu$=1) corresponding to 30kHz (including the self-scheduling part of cell-2 and cell-3/4) is $N_{cells}^{DL,1}=3$ , the number of cells in 60kHz group 2 ($\mu$=2) (including cell-5/6) is $N_{cells}^{DL,2}=2$ , and the total number of cells T=2+3+2=7.

b. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot(N_{cells}^{DL,0}+G_{cells}^{DL,0,V}-n3)/T\rfloor=\lfloor 4\cdot44\cdot2/7\rfloor=50$$ , and/or the maximum number of PDCCH candidates for group 1 ($\mu$=1) of 30kHz is

$$M_{PDCCH}^{total,slot,1}=\lfloor N_{cells}^{cap}\cdot M_{PDCCH}^{max,slot,1}\cdot N_{cells}^{DL,1}/T\rfloor=\lfloor 4\cdot 36\cdot 3/7\rfloor=61$$ , and/or the maximum number of PDCCH candidates for group 2 ($\mu$=2) of 60kHz is $$M_{PDCCH}^{total,slot,2}=\lfloor N_{cells}^{cap}\cdot M_{PDCCH}^{max,slot,2}\cdot N_{cells}^{DL,2}/T\rfloor=\lfloor 4\cdot 22\cdot 2/7\rfloor=25$$ .

6. Alternatively, determine the maximum control resource processing capability as follows (taking the maximum number of PDCCH candidates as an example):

a. The number of cells in unified group 0 ($\mu$=0) corresponding to 15kHz is

$$N_{cells}^{DL,0}+G_{cells}^{DL,0,V}=1+1+1=3$$ , the number of cells in group 1 ($\mu$=1) corresponding to 30kHz is

$$N_{cells}^{DL,1}\text{-n3}=3\text{-}1=2$$ (including the self-scheduling part of cell-2 and cell-3/4), the number of cells in 60kHz

group 2 ($\mu$=2) (including cell-5/6 ) is $$N_{cells}^{DL,2}=2$$ , and the total number of cells T=3+2+2=7.

b. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot (N_{cells}^{DL,0}+G_{cells}^{DL,0,V})/T\rfloor=\lfloor 4\cdot 44\cdot 3/7\rfloor=75$$ , and/or the maximum number of PDCCH candidates for group 1 ($\mu$=1) of 30kHz is

$$M_{PDCCH}^{total,slot,1}=\lfloor N_{cells}^{cap}\cdot M_{PDCCH}^{max,slot,1}\cdot (N_{cells}^{DL,1}\text{-n3})/T\rfloor=\lfloor 4\cdot 36\cdot 2/7\rfloor=41$$ , and/or the maximum number of PDCCH candidates for group 2 ($\mu$=2) of 60kHz is

$$M_{PDCCH}^{total,slot,2}=\lfloor N_{cells}^{cap}\cdot M_{PDCCH}^{max,slot,2}\cdot N_{cells}^{DL,2}/T\rfloor=\lfloor 4\cdot 22\cdot 2/7\rfloor=50$$ .

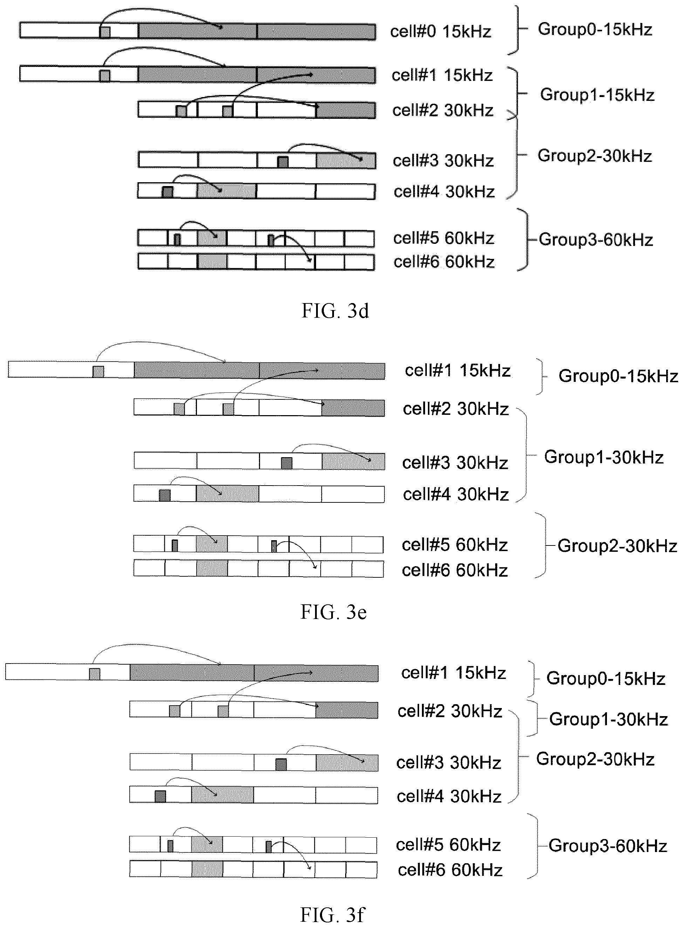

For grouping method 2, see FIG. 3d, and the details are as follows:

1. Maximum CA processing capability supported by UE $$N_{cells}^{cap}=4$$ .

2. The network configures 7 cells for UE for CA. Among them, the SCS of cell-0/1 is 15kHz, the SCS of cell-2/3/4 is 30kHz, and the SCS of cell-5/6 is 60kHz. Among them, cell -0/1/2/3/4/5 can be self-scheduled, and cell-1 can be scheduled by cell-2, and cell-6 can be scheduled by cell-5. cell-1 can be Pcell. Assume that the reference SCS is cell-1 SCS.

3. The cell weighting coefficient corresponding to the self-scheduling part of cell-2 is 1, and the duplication factor n3=1.

4. Cell-1 or cell-1 self-scheduling (or its corresponding control resource processing capability or budget) corresponds to 1 virtual cell, and cell-2 or cell-2 scheduling cell-1 (or its corresponding control resource processing capability or budget) corresponds to 1 virtual cell, and the duplication factor n3=1.

5. Determine the maximum control resource processing capability as follows (taking the maximum number of PDCCH candidates as an example):

a. The number of non-virtual cells in group 0 ($\mu$=0) corresponding to 15kHz is $$N_{cells}^{DL,0}=1$$ , the number of virtual cells in group 1 ($\mu$=0) corresponding to 15kHz is $$G_{cells}^{DL,0,V}=2$$ , the number of cells in group 2 ($\mu$=1) corresponding

to 30kHz (including the self-scheduling part of cell-2 and cell-3/4) is $$N_{cells}^{DL,1}=3$$ , the number of cells in 60kHz

group 3 ($\mu$=2) (including cell-5/6) is $$N_{cells}^{DL,2}=2$$ , and the total number of cells T=1+2-n3+3+2=7.

b. The maximum number of PDCCH candidates for group 0 and 1 ($\mu$=0) corresponding to 15kHz is

$$M_{PDCCH}^{total,slot,0}=\lfloor N_{cells}^{cap}\cdot M_{PDCCH}^{max,slot,0}\cdot (N_{cells}^{DL,0}+G_{cells}^{DL,0,V}\text{-n3})/T\rfloor=\lfloor 4\cdot 44\cdot 2/7\rfloor=50$$ , and/or the maximum number of PDCCH candidates for group 2 ($\mu$=1) of 30kHz is

$$M_{PDCCH}^{total,slot,1}=\left\lfloor N_{cells}^{cap}\cdot M_{PDCCH}^{max,slot,1}\cdot N_{cells}^{DL,1}/T\right\rfloor=\left\lfloor 4\cdot 36\cdot 3/7\right\rfloor=61$$ , and/or the maximum number of PDCCH candidates for group 3 ($\mu$=2) of 60kHz is $$M_{PDCCH}^{total,slot,2}=\left\lfloor N_{cells}^{cap}\cdot M_{PDCCH}^{max,slot,2}\cdot N_{cells}^{DL,2}/T\right\rfloor=\left\lfloor 4\cdot 22\cdot 2/7\right\rfloor=26$$ .

Optionally, groups 0 and 1 corresponding to 15kHz can be regarded as one group.

6. Alternatively, determine the maximum control resource processing capability as follows (taking the maximum number of PDCCH candidates as an example):

a. The number of non-virtual cells in group 0 ($\mu$=0) corresponding to 15kHz is $N_{cells}^{DL,0}=1$ , the number of virtual cells in group 1 ($\mu$=0) corresponding to 15kHz is $G_{cells}^{DL,0,V}=2$ , the number of cells in group 2 ($\mu$=1) corresponding

to 30kHz (including the self-scheduling part of cell-2 and cell-3/4) is $N_{cells}^{DL,1}-n3=3-1=2$ , the number of cells in 60kHz group 3 ($\mu$=2) (including cell-5/6) is $N_{cells}^{DL,2}=2$ , and the total number of cells T=1+2+2+2=7.

b. The maximum number of PDCCH candidates for group 0 and 1 ($\mu$=0) corresponding to 15kHz is

$$M_{PDCCH}^{total,slot,0}=\left\lfloor N_{cells}^{cap}\cdot M_{PDCCH}^{max,slot,0}\cdot (N_{cells}^{DL,0}+G_{cells}^{DL,0,V})/T\right\rfloor=\left\lfloor 4\cdot 44\cdot 3/7\right\rfloor=75$$ , and/or the maximum number of PDCCH candidates for group 2 ($\mu$=1) of 30kHz is

$$M_{PDCCH}^{total,slot,1}=\left\lfloor N_{cells}^{cap}\cdot M_{PDCCH}^{max,slot,1}\cdot (N_{cells}^{DL,1}-n3)/T\right\rfloor=\left\lfloor 4\cdot 36\cdot 2/7\right\rfloor=41$$ , and/or the maximum number of PDCCH candidates for group 3 ($\mu$=2) of 60kHz is

$$M_{PDCCH}^{total,slot,2}=\left\lfloor N_{cells}^{cap}\cdot M_{PDCCH}^{max,slot,2}\cdot N_{cells}^{DL,2}/T\right\rfloor=\left\lfloor 4\cdot 22\cdot 2/7\right\rfloor=28$$ .

Optionally, groups 0 and 1 corresponding to 15kHz can be regarded as one group.

**Embodiment 3**

For grouping method 1, see FIG. 3e, and the details are as follows:

1. Maximum CA processing capability supported by UE $N_{cells}^{cap}=4$ .

2. The network configures 6 cells for UE for CA. Among them, the SCS of cell-1 is 15kHz, the SCS of cell-2/3/4 is 30kHz, and the SCS of cell-5/6 is 60kHz. Among them, cell-1/2/3/4/5 can be self-scheduled, and cell-1 can be scheduled by cell-2, and cell-6 can be scheduled by cell-5. cell-1 can be Pcell. Assume that the reference SCS of vcell1 and vcell2 is the SCS of the corresponding scheduling cell, that is, the reference SCS of vcell 1 is 15kHz, and the reference SCS of vcell2 is 30kHz.

3. L1=1, L2=0.8, the cell weighting coefficient corresponding to the self-scheduling part of cell-2 is 0.2, n3=1, and the duplication factor n3=1.

4. Determine the maximum control resource processing capability as follows (taking the maximum number of PDCCH candidates as an example):

a. The number of virtual cells in group 0 ($\mu$=0) corresponding to 15kHz (including cell-1) is $G_{cells}^{DL,0,V}=L1=1$ , the number of cells in group 1 ($\mu$=1) corresponding to 30kHz (including cell-2 scheduling cell-1, the self-scheduling part of cell-2 and cell-3/4) is $N_{cells}^{DL,1}+G_{cells}^{DL,1,V}-n3=2+0.2+0.8-n3=2$ , and the number of cells in group 2 ($\mu$=2) of 60kHz (including cell-5/6) is $N_{cells}^{DL,2}=2$ . The total number of groups T=1+2+2=5.

b. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot G_{cells}^{DL,0,V}/T\rfloor=\lfloor 4\cdot 44\cdot 1/5\rfloor=35$$ , and/or the maximum number of PDCCH candidates for group 1 ($\mu$=1) of 30kHz is

$$M_{PDCCH}^{total,slot,1}=\lfloor N_{cells}^{cap}\cdot M_{PDCCH}^{max,slot,1}\cdot (N_{cells}^{DL,1}+G_{cells}^{DL,1,V}-n3)/T\rfloor=\lfloor 4\cdot 36\cdot 2/5\rfloor=57$$ , and/or the maximum number of PDCCH candidates for group 2 ($\mu$=2) of 60kHz is

$$M_{PDCCH}^{total,slot,2}=\lfloor N_{cells}^{cap}\cdot M_{PDCCH}^{max,slot,2}\cdot N_{cells}^{DL,2}/T\rfloor=\lfloor 4\cdot 22\cdot 2/5\rfloor=35$$ .

For grouping method 2, see FIG. 3f, and the details are as follows:

1. Maximum CA processing capability supported by UE $N_{cells}^{cap}=4$ .

2. The network configures 6 cells for UE for CA. Among them, the SCS of cell-1 is 15kHz, the SCS of cell-2/3/4 is 30kHz, and the SCS of cell-5/6 is 60kHz. Among them, cell-1/2/3/4/5 can be self-scheduled, and cell-1 can be scheduled by cell-2, and cell-6 can be scheduled by cell-5. cell-1 can be Pcell. Assume that the reference SCS of vcell1 and vcell2 is the SCS of the corresponding scheduling cell, that is, the reference SCS of vcell 1 is 15kHz, and the reference SCS of vcell2 is 30kHz.

3. L1=1, L2=0.8, the cell weighting coefficient corresponding to the self-scheduling part of cell-2 is 0.2, and the duplication factor n3=1.

4. Determine the maximum control resource processing capability as follows (taking the maximum number of PDCCH candidates as an example):

a. The number of virtual cells in group 0 ($\mu$=0) corresponding to 15kHz (including cell-1) is $G_{cells}^{DL,0,V}=L1=1$ , the number of virtual cells in group 1 ($\mu$=1) corresponding to 30kHz (including cell-2 scheduling cell 2 -1) is

$$N_{cells}^{DL,1}=0.8$$ , the number of cells in group 2 ($\mu$=1) corresponding to 30kHz (including the self-scheduling part of cell-2 and cell-3/4) is $$N_{cells}^{DL,1}=2+0.2=2.2$$ , and the number of cells in group ($\mu$=2) of 60kHz (including cell-5/6) is $N_{cells}^{DL,2}=2$ . The total number of groups T=1+0.8+2.2+2-n3=5.

b. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot G_{cells}^{DL,0,V}/T\rfloor=\lfloor 4\cdot 44\cdot 1/5\rfloor=35$$ , and/or the maximum number of PDCCH candidates for group 1 and group 2 ($\mu$=1) of 30kHz is

$$M_{PDCCH}^{total,slot,1}=\lfloor N_{cells}^{cap}\cdot M_{PDCCH}^{max,slot,1}\cdot (N_{cells}^{DL,1}+G_{cells}^{DL,1,V}-n3)/T\rfloor=\lfloor 4\cdot 36\cdot 2/5\rfloor=57$$ , and/or the maximum number of PDCCH candidates for group 2 ($\mu$=2) of 60kHz is

$$M_{PDCCH}^{total,slot,2}=\lfloor N_{cells}^{cap}\cdot M_{PDCCH}^{max,slot,2}\cdot N_{cells}^{DL,2}/T\rfloor=\lfloor 4\cdot 22\cdot 2/5\rfloor=35$$ .

Optionally, groups 2 and 1 corresponding to 30kHz can be regarded as one group.

c. The maximum number of PDCCH candidates for group 0 ($\mu$=0) corresponding to 15kHz is

$$M_{PDCCH}^{total,slot,0}=\lfloor N_{cells}^{cap}\cdot M_{PDCCH}^{max,slot,0}\cdot G_{cells}^{DL,0,V}/T\rfloor=\lfloor 4\cdot 44\cdot 1/5\rfloor=35$$ , and/or the maximum number of PDCCH candidates for group 1 ($\mu$=1) of 30kHz is $$M_{PDCCH}^{total,slot,1}=\lfloor N_{cells}^{cap}\cdot M_{PDCCH}^{max,slot,1}\cdot G_{cells}^{DL,1}/T\rfloor=\lfloor 4\cdot 36\cdot 0.8/5\rfloor=23$$ , and/or the maximum number of PDCCH candidates for group 2 ($\mu$=1) of 30kHz is

$$M_{PDCCH}^{total,slot,1}=\lfloor N_{cells}^{cap}\cdot M_{PDCCH}^{max,slot,1}\cdot (N_{cells}^{DL,1}-n3)/T\rfloor=\lfloor 4\cdot 36\cdot 1.2/5\rfloor=34$$ , and/or the maximum number of PDCCH candidates for group 2 ($\mu$=2) of 60kHz is

$$M_{PDCCH}^{total,slot,2} = \lfloor N_{cells}^{cap} \cdot M_{PDCCH}^{max,slot,2} \cdot$$

$$N_{cells}^{DL,2}/T \rfloor = \lfloor 4 \cdot 22 \cdot 2/5 \rfloor = 35.$$

**Embodiment 4**

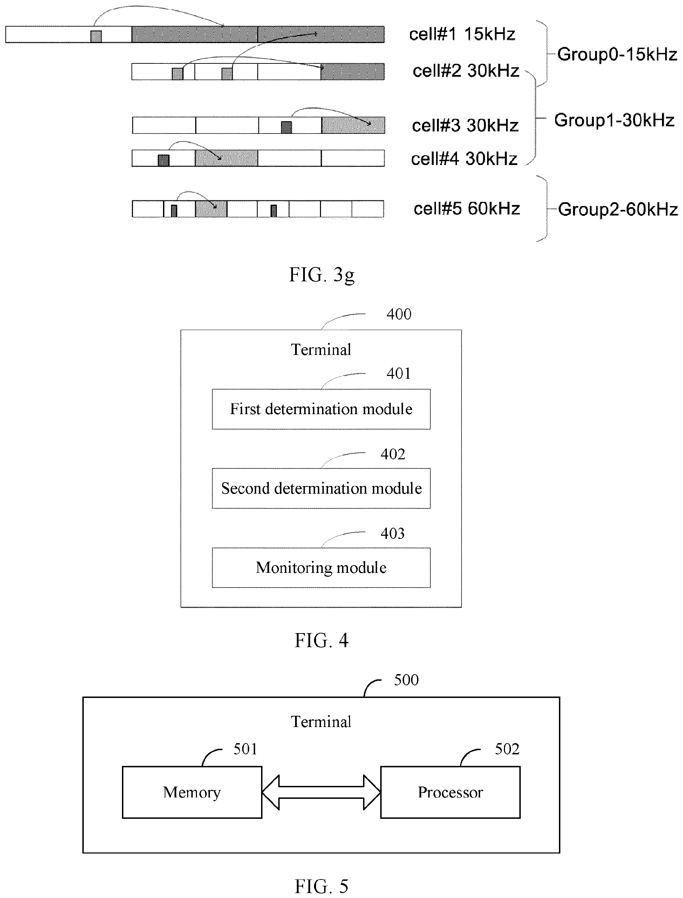

See FIG. 3g, and details are as follows:

1. Maximum CA processing capability supported by UE $N_{cells}^{cap}=4$.

2. The network configures 5 cells for UE for CA. Among them, the SCS of cell-1 is 15kHz, the SCS of cell-2/3/4 is 30kHz, and the SCS of cell-5 is 60kHz. Among them, cell-1/2/3/4/5 can be self-scheduled, and cell-1 can be scheduled by cell-2. cell-1 can be Pcell. Assume that the reference SCS is cell-1 SCS.

3. The cell weighting coefficient corresponding to the self-scheduling part of cell-2 is 0.2.

4. Cell-1 or cell-1 self-scheduling (or its corresponding control resource processing capability or budget), and cell-2 or cell-2 scheduling cell-1 (or its corresponding control resource processing capability or budget) corresponds to 0.8 virtual cell, that is, L=0.8, and/or, L1=L2=0.4.

5. The virtual group corresponding to the reference SCS is group0 in the figure, and the maximum control resource processing capability is determined as follows (taking the maximum number of PDCCH candidates as an example):

a. The number of virtual cells in group ($\mu$=0) corresponding to 15kHz is $G_{cells}^{DL,0,V}=L=0.8$, the number of cells in group ($\mu$=1) corresponding to 30kHz (including the self-scheduling part of cell-2 and cell-3/4) is $N_{cells}^{DL,1}=0.2+2=2.2$, the number of cells in 60kHz group ($\mu$=2) (including cell-5 ) is $N_{cells}^{DL,2}=2$, and the total number of groups T=0.8+2.2+1=4.

b. The maximum number of PDCCH candidates corresponding to each virtual cell in the group corresponding to 15kHz ($\mu$=0) is $M_{PDCCH}^{max,,slot,0}=44$, and/or the maximum number of PDCCH candidates corresponding to cell-1 is $L1*M_{PDCCH}^{max,,slot,0}=22$, and/or the maximum number of PDCCH candidates corresponding to cell-2 is $L2*M_{PDCCH}^{max,,slot,0}=22$.

**Embodiment 5**

Separately process the part of scheduling cell-1 by cell-2, and details are as follows:
The UE processes cell-2 or cell-2 scheduling cell-1 (or its corresponding control resource processing capability or budget) as one (or L2, where L2 may be an integer or a fraction) virtual cell vcell2, where the reference SCS of cell-2 is 30kHz, and then the virtual cell is considered to belong to the virtual cell group corresponding to 30kHz. Further optionally, if there is a cell group corresponding to 30 kHz in the configured cells (for example, the self-scheduled part of cell-2, cell-3, and cell-4 belong to this cell group). The union set of the virtual cell group and the cell group are processed together, for example, a new group (cell-2 schedules the cell-1 part, cell-2 self-schedules, cell-3, cell-4) is formed and processed, or the virtual cell group and the cell group are processed separately.

Referring to FIG. 4, this embodiment of the present application provides a control resource monitoring apparatus 400, which includes:

a first determination module 401, configured to determine a virtual object and/or an object group;
a second determination module 402, configured to determine a control resource processing capability corresponding to the virtual object and/or a control resource processing capability corresponding to the object group based on the determined virtual object and/or object group; and
a monitoring module 403, configured to monitor a control resource according to the control resource processing capability;
where the virtual object and/or object group is determined according to at least one of the following:

a first object or a self-scheduling resource of the first object; and
a second object or a resource of scheduling the first object by the second object;
where the first object is scheduled by at least two objects, and the second object is at least part of the objects that schedule the first object.

In a possible implementation, the second determination module 402 is further configured to:

determine the total number of objects; and
determine the control resource processing capability corresponding to the virtual object and/or object group according to the total number of objects.

In a possible implementation, the second determination module 402 is further configured to:

compare the total number of objects with a maximum processing number; and
determine the control resource processing capability corresponding to the virtual object and/or the control resource processing capability corresponding to the object group based on a comparison result.

In a possible implementation, the first object or the self-scheduling resource of the first object, and/or the second object or the resource of scheduling the first object by the second object is the virtual object.
In a possible implementation, the first object or the self-scheduling resource of the first object, and the second object or the resource of scheduling the first object by the second object is a first virtual object; and/or

the first object or the self-scheduling resource of the first object is a second virtual obj ect; and/or
the second object or the resource of scheduling the first object by the second object is a third virtual object.

In a possible implementation, a control resource processing capability corresponding to the first object or a control resource processing capability corresponding to the self-scheduling resource of the first object, and a control resource processing capability corresponding to the second object or the resource of scheduling the first object by the second object is a control resource processing capability corresponding to the first virtual object; and/or

a control resource processing capability corresponding to the first object or a control resource processing capability corresponding to the self-scheduling resource of the first object is a control resource processing capability corresponding to the second virtual object;
and/or a control resource processing capability corresponding to the second object or the resource of scheduling the first object by the second object is a control resource processing capability corresponding to the third virtual object.

In a possible implementation, the apparatus further includes: an obtaining module, configured to obtain an object, where the obtained object includes: first-type objects and/or second-type objects;

where the first-type object is a virtual object, and the second-type object is a configured object;
or
the first-type object is a virtual object, and the second-type object is a non-virtual obj ect.

In a possible implementation, the control resource processing capabilities corresponding to the obtained objects include: the control resource processing capabilities corresponding to the first-type objects and/or the control resource processing capabilities corresponding to the second-type objects;

where the control resource processing capability corresponding to the first-type object is the control resource processing capability corresponding to the virtual object, and the control resource processing capability corresponding to the second-type object is the control resource processing capability corresponding to the configured object;
or
the control resource processing capability corresponding to the first-type object is the control resource processing capability corresponding to the virtual object, and the control resource processing capability corresponding to the second-type object is the control resource processing capability corresponding to the non-virtual object.

In a possible implementation, the virtual object or the control resource processing capability corresponding to the virtual object has a reference SCS, and the reference SCS includes any one of the following:

an SCS of the first object or the self-scheduling resource of the first object;
an SCS of the second object or the resource of scheduling the first object by the second object;
the largest SCS of the SCS of the first object or the self-scheduling resource of the first object and the SCS of the second object or the resource of scheduling the first object by the second object;
the smallest SCS of the SCS of the first object or the self-scheduling resource of the first object and the SCS of the second object or the resource of scheduling the first object by the second object;
the weighted sum of the SCS of the first object or the self-scheduling resource of the first object and the SCS of the second object or the resource of scheduling the first object by the second object;
an SCS of a control resource processing capability corresponding to the first object or a control resource processing capability corresponding to the self-scheduling resource of the first obj ect;
an SCS of a control resource processing capability corresponding to the second object or the resource of scheduling the first object by the second object;
the largest SCS of the SCS of the control resource processing capability corresponding to the first object or the control resource processing capability corresponding to the self-scheduling resource of the first object and the SCS of the control resource processing capability corresponding to the second object or the resource of scheduling the first object by the second object;
the smallest SCS of the SCS of the control resource processing capability corresponding to the first object or the control resource processing capability corresponding to the self-scheduling resource of the first object and the SCS of the control resource processing capability corresponding to the second object or the resource of scheduling the first object by the second object;
the weighted sum of the SCS of the control resource processing capability corresponding to the first object or the control resource processing capability corresponding to the self-scheduling resource of the first object and the SCS of the control resource processing capability corresponding to the second object or the resource of scheduling the first object by the second object;
a predefined SCS; and
a configured SCS.

In a possible implementation, reference SCSs corresponding to at least two of the first virtual object, the second virtual object, and the third virtual object are the same;
and/or
reference SCSs corresponding to at least two of the control resource processing capabilities corresponding to the first virtual object, the second virtual object, and the third virtual object are the same.
In a possible implementation, the apparatus also includes:
a third determination module, configured to: determine that objects corresponding to the same reference SCS belong to the same object group, and/or determine that control resource processing capabilities corresponding to objects corresponding to the same reference SCS belong to the same object group.
In a possible implementation, the third determination module is also configured to:
determining, by the terminal based on a reference SCS corresponding to the obtained object or a reference SCS corresponding to a control resource processing capability corresponding to the obtained object, that the objects corresponding to the same reference SCS belong to the same target object group, and/or determining that control resource processing capabilities corresponding to objects corresponding to the same reference SCS belong to the same target object group.
In a possible implementation, the third determination module is also configured to perform one or more of the following:

determining, by the terminal based on the reference SCS corresponding to the first-type object, that first-type objects corresponding to the same reference SCS belong to the same first-type object group, and/or determining, by the terminal based on the reference SCS corresponding to the control resource processing capability corresponding to the first-type object, that the control resource processing capabilities corresponding to the first-type objects corresponding to the same reference SCS belong to the same first-type object group; and
determining, by the terminal based on the reference SCS corresponding to the second-type object, that the second-type object corresponding to the same reference SCS belong to the same second-type object group, and/or determining, by the terminal based on the reference SCS corresponding to the control resource processing capability corresponding to the second-type object, that the control resource processing capabilities corresponding to the second-type objects corresponding to the same reference SCS belong to the same second-type object group.

In a possible implementation, the third determination module is also configured to:

in the case that the second-type object is a configured object, determine that among configured objects, objects corresponding to the same reference SCS other than a first excluded object belong to the same second-type object group; and/or
determining, by the terminal, that among the control resource processing capabilities corresponding to the configured objects, the control resource processing capabilities corresponding to the objects corresponding to the same reference SCS other than a control resource processing capability corresponding to a first excluded object belong to the same second-type object group;
where the first excluded object includes at least one of the following:

the first object or the self-scheduling resource of the first object; and
the second object or the resource of scheduling the first object by the second object.

In a possible implementation, the first determination module 401 is also configured to:
determine the total number of objects based on at least one of the number of first-type objects, the number of second-type objects, and the size of the object group.
In a possible implementation, the first determination module 401 is also configured to:
The terminal determines the total number of objects according to the total number of first-type objects and/or the total number of second-type objects; where the total number of first-type objects is determined according to the number of first-type objects or the size of the first-type object group; and/or the total number of second-type objects is determined according to the number of second-type objects or the second-type object group.
In a possible implementation, the first determination module 401 is also configured to:

remove a duplication factor from the number of first-type objects, the number of second-type objects, the size of the object group, the size of a first-type object group, and/or the size of a second-type object group;
or
remove the duplication factor from the total number of objects.

In a possible implementation, the second determination module 402 is also configured to perform at least one of the following:

in a case that the total number of objects is not greater than the maximum processing number, or in a case that the total number of objects minus the first duplication factor is not greater than the maximum processing number, determining, by the terminal, that the maximum control resource processing capability is a first capability;
in a case that the total number of objects is greater than the maximum processing number, or in a case that the total number of objects minus the second duplication factor is greater than the maximum processing number, determining, by the terminal, that the maximum control resource processing capability corresponding to the object group is a second capability; and
in a case that the total number of objects is greater than the maximum processing number, or in a case that the total number of objects minus the third duplication factor is greater than the maximum processing number, determining, by the terminal, that the maximum control resource processing capability is a third capability.

In a possible implementation, the second determination module 402 is also configured to:

determine the first capability according to a preset control resource processing capability;
the determining, by the terminal, that the maximum control resource processing capability is the second capability includes:

determining, by the terminal, the second capability based on a preset control resource processing capability, the maximum processing number, the size of the object group, and the total number of objects; and
the determining, by the terminal, that the maximum control resource processing capability is the third capability includes:
determining, by the terminal, the third capability based on the preset control resource processing capability and the second capability, or determining, by the terminal, the third capability based on the first capability and the second capability.

In a possible implementation, the second determination module 402 is also configured to:

remove the duplication factor from the size of the object group, and determining the second capability based on at least two of the preset control resource processing capability, the maximum processing number, the size of the object group, and the total number of objects;
or
remove the duplication factor from the total number of objects, and determining the second capability based on at least two of the preset control resource processing capability, the maximum processing number, the size of the object group, and the total number of objects.

In a possible implementation, at least one of resources of the first object, the second object, and an object other than the first object scheduled by the second object has an object coefficient, and the object coefficient is associated with a control resource processing capability corresponding to at least one of the resources of the first object, the second object, and the object other than the first object scheduled by the second object.

In a possible implementation, the object coefficient corresponding to the second object and/or the object coefficient corresponding to the resource of the object other than the first object scheduled by the second object includes any one of the following:

the number of objects scheduled by the second object;
the number of objects scheduled by the second object minus the duplication factor; and
a number of objects other than the first object among objects scheduled by the second object.

In a possible implementation, the object includes any of the following:

a cell;
a carrier;
a frequency;
a time domain resource set;
a frequency domain resource set;
a time-frequency domain resource set;
a BWP; and
a resource pool.

In a possible implementation, the duplication factor is any one of the following:

a preset value;
the number of the first objects;
a preconfigured value on the network side;
a value reported by the terminal;
the number of the second objects; and
a number of second objects corresponding to a particular first object.

The control resource monitoring apparatus in the embodiment of the present application may be a device, or may be a component, integrated circuit, or chip in the terminal. The apparatus may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine or a self-service machine. This is not specifically limited in the embodiments of the present application.

The control resource monitoring apparatus in the embodiment of the present application may be an apparatus with an operating system. The operating system may be an Android (Android) operating system, may be an iOS operating system, or may be another possible operating system. This is not specifically limited in this embodiment of this application.

The control resource monitoring apparatus provided by the embodiment of the present application can implement various processes implemented by the method embodiments of FIG. 2 to FIG. 3g. To avoid duplication, they will not be described again here.

Optionally, as shown in FIG. 5, the embodiment of the present application further provides a terminal 500, including a memory 501, a processor 502, and programs or instructions stored in the memory 501 and operable on the processor 502, When the program or instruction is executed by the processor 502, each process of the above-mentioned method embodiment can be realized, and the same technical effect can be achieved. To avoid repetition, details are not repeated here.

It should be noted that the electronic devices in the embodiments of the present application include mobile electronic devices and non-mobile electronic devices.

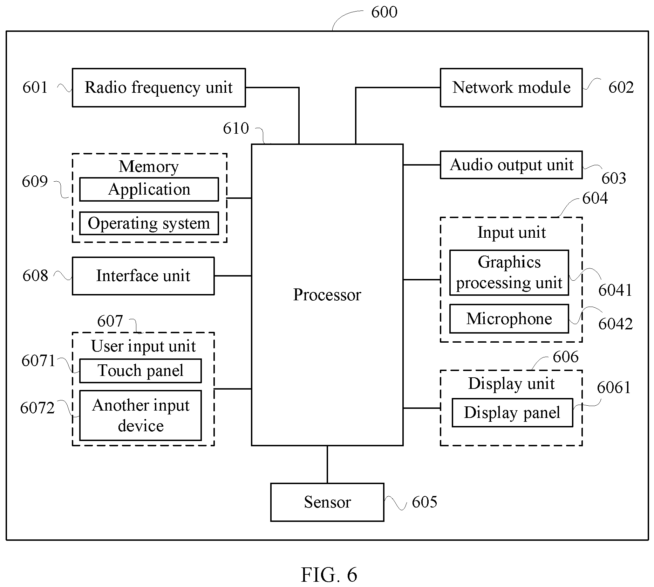

FIG. 6 is a schematic diagram of a hardware structure of an electronic device according to an embodiment of this application.

An electronic device 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the electronic device 600 may further include a power supply (such as a battery) that supplies power to each component. The power supply may be logically connected to the processor 610 by using a power supply management system, to implement functions such as charging and discharging management, and power consumption management by using the power supply management system. The structure of the electronic device shown in FIG. 6 does not constitute a limitation on the electronic device. The electronic device may include components more or fewer than those shown in the diagram, a combination of some components, or different component arrangements. Details are not described herein.

The processor 610 is configured to:

determine a virtual object and/or an object group;

determine a control resource processing capability corresponding to the virtual object and/or a control resource processing capability corresponding to the object group based on the determined virtual object and/or object group; and

monitor a control resource according to the control resource processing capability;

where the virtual object and/or object group is determined according to at least one of the following:

a first object or a self-scheduling resource of the first object; and

a second object or a resource of scheduling the first object by the second object;

where the first object is scheduled by at least two objects, and the second object is at least part of the objects that schedule the first object.

In a possible implementation, the processor 610 is configured to:

determine the total number of objects; and

determine the control resource processing capability corresponding to the virtual object and/or the control resource processing capability corresponding to the object group according to the total number of objects.

In a possible implementation, the processor 610 is configured to:

compare the total number of objects with a maximum processing number; and

determine the control resource processing capability corresponding to the virtual object and/or the control resource processing capability corresponding to the object group based on a comparison result.

In a possible implementation, the first object or the self-scheduling resource of the first object, and/or the second object or the resource of scheduling the first object by the second object is the virtual object.

In a possible implementation, the first object or the self-scheduling resource of the first object, and the second object or the resource of scheduling the first object by the second object is a first virtual object;

and/or

the first object or the self-scheduling resource of the first object is a second virtual obj ect;

and/or

the second object or the resource of scheduling the first object by the second object is a third virtual object.

In a possible implementation, a control resource processing capability corresponding to the first object or the self-scheduling resource of the first object, and a control resource processing capability corresponding to the second object or the resource of scheduling the first object by the second object is a control resource processing capability corresponding to the first virtual object;
and/or

a control resource processing capability corresponding to the first object or a control resource processing capability corresponding to the self-scheduling resource of the first object is a control resource processing capability corresponding to the second virtual object;
and/or a control resource processing capability corresponding to the second object or a control resource processing capability corresponding to the resource of scheduling the first object by the second object is a control resource processing capability corresponding to the third virtual object.

In a possible implementation, the processor 610 is further configured to obtain an object, where the obtained object includes: first-type objects and/or second-type objects;

where the first-type object is a virtual object, and the second-type object is a configured object;
or
the first-type object is a virtual object, and the second-type object is a non-virtual obj ect.

In a possible implementation, the control resource processing capabilities corresponding to the obtained objects include: the control resource processing capabilities corresponding to the first-type objects and/or the control resource processing capabilities corresponding to the second-type objects;

where the control resource processing capability corresponding to the first-type object is the control resource processing capability corresponding to the virtual object, and the control resource processing capability corresponding to the second-type object is the control resource processing capability corresponding to the configured object;
or
the control resource processing capability corresponding to the first-type object is the control resource processing capability corresponding to the virtual object, and the control resource processing capability corresponding to the second-type object is the control resource processing capability corresponding to the non-virtual object.

In a possible implementation, the virtual object or the control resource processing capability corresponding to the virtual object has a reference SCS, and the reference SCS includes any one of the following:

an SCS of the first object or the self-scheduling resource of the first object;
an SCS of the second object or the resource of scheduling the first object by the second object;
the largest SCS of the SCS of the first object or the self-scheduling resource of the first object and the SCS of the second object or the resource of scheduling the first object by the second object;
the smallest SCS of the SCS of the first object or the self-scheduling resource of the first object and the SCS of the second object or the resource of scheduling the first object by the second object;
the weighted sum of the SCS of the first object or the self-scheduling resource of the first object and the SCS of the second object or the resource of scheduling the first object by the second object;
an SCS of a control resource processing capability corresponding to the first object or a control resource processing capability corresponding to the self-scheduling resource of the first obj ect;
an SCS of a control resource processing capability corresponding to the second object or a control resource processing capability corresponding to the resource of scheduling the first object by the second object;
the largest SCS of the SCS of the control resource processing capability corresponding to the first object or the control resource processing capability corresponding to the self-scheduling resource of the first object and the SCS of the control resource processing capability corresponding to the second object or the resource of scheduling the first object by the second object;
the smallest SCS of the SCS of the control resource processing capability corresponding to the first object or the control resource processing capability corresponding to the self-scheduling resource of the first object and the SCS of the control resource processing capability corresponding to the second object or the control resource processing capability corresponding to the resource of scheduling the first object by the second object;
the weighted sum of the SCS of the control resource processing capability corresponding to the first object or the control resource processing capability corresponding to the self-scheduling resource of the first object and the SCS of the control resource processing capability corresponding to the second object or the control resource processing capability corresponding to the resource of scheduling the first object by the second object;
a predefined SCS; and

a configured SCS.

In a possible implementation, reference SCSs corresponding to at least two of the first virtual object, the second virtual object, and the third virtual object are the same;

and/or

reference SCSs corresponding to at least two of the control resource processing capabilities corresponding to the first virtual object, the second virtual object, and the third virtual object are the same.

In a possible implementation, the processor 610 is configured to:
determine that objects corresponding to the same reference SCS belong to the same object group, or determining, by the terminal, that control resource processing capabilities corresponding to objects corresponding to the same reference SCS belong to the same object group.

In a possible implementation, the processor 610 is configured to:
determine, based on a reference SCS corresponding to the obtained object or a reference SCS corresponding to a control resource processing capability corresponding to the obtained object, that the objects corresponding to the same reference SCS belong to the same target object group, or determine that control resource processing capabilities corresponding to objects corresponding to the same reference SCS belong to the same target object group.

In a possible implementation, the determining, by the terminal, that objects corresponding to the same reference SCS belong to the same object group, or determining, by the terminal, that control resource processing capabilities corresponding to objects corresponding to the same reference SCS belong to the same object group includes:

determining, by the terminal based on a reference SCS corresponding to the first-type object or a reference SCS corresponding to a control resource processing capability corresponding to the first-type object, that the first-type objects corresponding to the same reference SCS belong to the same first-type object group, or determining that control resource processing capabilities corresponding to first-type objects corresponding to the same reference SCS belong to the same first-type object group;

and/or

determine, based on a reference SCS corresponding to the second-type object or a reference SCS corresponding to a control resource processing capability corresponding to the second-type object, that the second-type objects corresponding to the same reference SCS belong to the same second-type object group, or determine that control resource processing capabilities corresponding to second-type objects corresponding to the same reference SCS belong to the same second-type object group.

In a possible implementation, the processor 610 is configured to:
determine the total number of objects based on at least one of the number of first-type objects, the number of second-type objects, and the size of the object group.

In a possible implementation, the processor 610 is configured to:

determine the total number of objects based on the total number of first-type objects and/or the total number of second-type objects;
where the total number of first-type objects is determined according to the number of first-type objects or the size of the first-type object group; and/or the total number of second-type objects is determined according to the number of second-type objects or the second-type object group.

In a possible implementation, the processor 610 is configured to:

remove a duplication factor from the number of first-type objects, the number of second-type objects, the size of the object group, the size of a first-type object group, and/or the size of a second-type object group;

or

remove the duplication factor from the total number of objects.

In a possible implementation, the processor 610 is configured to perform at least one of the following:

in a case that the total number of obj ects is not greater than the maximum processing number, or in a case that the total number of objects minus the first duplication factor is not greater than the maximum processing number, determining, by the terminal, that the maximum control resource processing capability is a first capability;
in a case that the total number of objects is greater than the maximum processing number, or in a case that the total number of objects minus the second duplication factor is greater than the maximum processing number, determining, by the terminal, that the maximum control resource processing capability corresponding to the object group is a second capability; and

in a case that the total number of objects is greater than the maximum processing number, or in a case that the total number of objects minus the third duplication factor is greater than the maximum processing number, determining, by the terminal, that the maximum control resource processing capability is a third capability.

In a possible implementation, the processor 610 is configured to:

determine the first capability according to a preset control resource processing capability;
the determining, by the terminal, that the maximum control resource processing capability is the second capability includes:

determining, by the terminal, the second capability based on a preset control resource processing capability, the maximum processing number, the size of the object group, and the total number of objects; and
the determining, by the terminal, that the maximum control resource processing capability is the third capability includes:
determining, by the terminal, the third capability based on the preset control resource processing capability and the second capability, or determining, by the terminal, the third capability based on the first capability and the second capability.

In a possible implementation, the processor 610 is configured to:

remove the duplication factor from the size of the object group, and determining the second capability based on at least two of the preset control resource processing capability, the maximum processing number, the size of the object group, and the total number of objects;
or
remove the duplication factor from the total number of objects, and determining the second capability based on at least two of the preset control resource processing capability, the maximum processing number, the size of the object group, and the total number of objects.

In a possible implementation, at least one of resources of the first object, the second object, and an object other than the first object scheduled by the second object has an object coefficient, and the object coefficient is associated with a control resource processing capability corresponding to at least one of the resources of the first object, the second object, and the object other than the first object scheduled by the second object.

In a possible implementation, the object coefficient corresponding to the second object and/or the object coefficient corresponding to the resource of the object other than the first object scheduled by the second object includes any one of the following:

the number of objects scheduled by the second object;
the number of objects scheduled by the second object minus the duplication factor; and
the number of objects other than the first object among the objects scheduled by the second object.

In a possible implementation, the object includes any of the following:

a cell;
a carrier;
a frequency;
a time domain resource set;
a frequency domain resource set;
a time-frequency domain resource set;
a BWP; and
a resource pool;
the number of the second objects; and
a number of second objects corresponding to a particular first object.

In a possible implementation, the duplication factor is as described above, and the duplication factor is any one of the following:

a preset value;
the number of the first objects;
a preconfigured value on the network side;
a value reported by the terminal.

It should be understood that in the embodiments of this application, the input unit 604 may include a graphics processing unit (Graphics Processing Unit, GPU) 6041 and a microphone 6042, and the graphics processing unit 6041 processes image data of a still picture or video obtained by an image capture apparatus (such as a camera) in a video capture mode or an image capture mode. The display unit 606 may include a display panel 6061. Optionally, the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein. The memory 609 may be configured to store a software program and various data, including but not limited to an application program and an operating system. An application processor and a modem processor may be integrated into the processor 610, the application processor mainly processes an operating system, a user interface, an application program, and the like, and the modem processor mainly processes wireless communication. It can be understood that, the above modem processor may not be integrated into the processor 610.

An embodiment of this application further provides a readable storage medium. The readable storage medium stores a program or instructions. When the program or the instructions are executed by a processor, the processes of the foregoing method embodiments are implemented, with the same technical effects achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of the present application further provides a computer program product stored in a nonvolatile storage medium, and the computer program product is executed by at least one processor to implement steps of the foregoing method.

The embodiment of the present application further provides an execution apparatus, and the execution apparatus is configured to execute the foregoing method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A control resource monitoring method, comprising:

    determining, by a terminal, a virtual object and/or an object group;
    determining, by the terminal, a control resource processing capability corresponding to the virtual object and/or a control resource processing capability corresponding to the object group based on the determined virtual object and/or object group; and
    monitoring, by the terminal, a control resource according to the control resource processing capability;
    wherein the virtual object and/or object group is determined according to at least one of the following:

        a first object or a resource for self-scheduling for the first object; and
        a second object or a resource for scheduling the first object by the second object;
        wherein the first object is scheduled by at least two objects, and the second object is at least part of the objects that schedule the first object.

2. The method according to claim 1, wherein the determining a control resource processing capability corresponding to the virtual object and/or a control resource processing capability corresponding to the object group comprises:

    determining, by the terminal, a total number of objects; and
    determining, by the terminal, the control resource processing capability corresponding to the virtual object and/or the control resource processing capability corresponding to the object group based on the total number of objects.

3. The method according to claim 2, wherein the determining, by the terminal, the control resource processing capability corresponding to the virtual object and/or the control resource processing capability corresponding to the object group based on the total number of objects comprises:

    comparing, by the terminal, the total number of objects with a maximum processing number; and
    determining, by the terminal, the control resource processing capability corresponding to the virtual object and/or the control resource processing capability corresponding to the object group based on a comparison result.

4. The method according to claim 1, wherein
    the first object or the self-scheduling resource of the first object, and/or the second object or the resource of scheduling the first object by the second object is the virtual object.

5. The method according to claim 4, wherein

    the first object or the self-scheduling resource of the first object, and the second object or the resource of scheduling the first object by the second object is a first virtual object;
    and/or
    the first object or the self-scheduling resource of the first object is a second virtual object;
    and/or
    the second object or the resource of scheduling the first object by the second object is a third virtual object.

6. The method according to claim 4, wherein

    a control resource processing capability corresponding to the first object or a control resource processing capability corresponding to the self-scheduling resource of the first object, and a control resource processing capability corresponding to the second object or a control resource processing capability corresponding to the resource of scheduling the first object by the second object is a control resource processing capability corresponding to the first virtual obj ect;
    and/or
    a control resource processing capability corresponding to the first object or a control resource processing capability corresponding to the self-scheduling resource of the first object is a control resource processing capability corresponding to the second virtual object;
and/or
a control resource processing capability corresponding to the second object or a control resource processing capability corresponding to the resource of scheduling the first object by the second object is a control resource processing capability corresponding to the third virtual obj ect.

**7.** The method according to claim 2, wherein the method further comprises: obtaining, by the terminal, an object, and the obtained object comprises: a first-type object and/or a second-type object;

wherein the first-type object is a virtual object, and the second-type object is a configured obj ect;
or
the first-type object is a virtual object, and the second-type object is a non-virtual object.

**8.** The method according to claim 1 or 7, wherein the method further comprises:
determining, by the terminal, that objects corresponding to the same reference SCS belong to the same object group, and/or determining, by the terminal, that control resource processing capabilities corresponding to objects corresponding to the same reference SCS belong to the same object group.

**9.** The method according to claim 8, wherein the determining, by the terminal, that objects corresponding to the same reference SCS belong to the same object group, and/or determining, by the terminal, that control resource processing capabilities corresponding to objects corresponding to the same reference SCS belong to the same object group comprises:
determining, by the terminal based on a reference SCS corresponding to the obtained object or a reference SCS corresponding to a control resource processing capability corresponding to the obtained object, that the objects corresponding to the same reference SCS belong to the same target object group, or determining that control resource processing capabilities corresponding to objects corresponding to the same reference SCS belong to the same target object group.

**10.** The method according to claim 8, wherein the determining, by the terminal, that objects corresponding to the same reference SCS belong to the same object group, and/or determining, by the terminal, that control resource processing capabilities corresponding to objects corresponding to the same reference SCS belong to the same object group comprises one or more of the following:

determining, by the terminal based on the reference SCS corresponding to the first-type object, that first-type objects corresponding to the same reference SCS belong to the same first-type object group, and/or determining, by the terminal based on the reference SCS corresponding to the control resource processing capability corresponding to the first-type object, that the control resource processing capabilities corresponding to the first-type objects corresponding to the same reference SCS belong to the same first-type object group; and
determining, by the terminal based on the reference SCS corresponding to the second-type object, that the second-type object corresponding to the same reference SCS belong to the same second-type object group, and/or determining, by the terminal based on the reference SCS corresponding to the control resource processing capability corresponding to the second-type object, that the control resource processing capabilities corresponding to the second-type objects corresponding to the same reference SCS belong to the same second-type object group.

**11.** The method according to claim 10, wherein
in a case that the second-type object is a configured object, the determining, by the terminal, that second-type objects corresponding to the same reference SCS belong to the same second-type object group comprises:

determining, by the terminal, that among configured objects, objects corresponding to the same reference SCS other than a first excluded object belong to the same second-type object group;
and/or in a case that the second-type object is a configured object, the determining, by the terminal, that the control resource processing capabilities corresponding to the second-type objects corresponding to the same reference SCS belong to the same second-type object group comprises:

determining, by the terminal, that among the control resource processing capabilities corresponding to the configured objects, the control resource processing capabilities corresponding to the objects corresponding to the same reference SCS other than a control resource processing capability corresponding to a first excluded object belong to the same second-type object group;
wherein the first excluded object comprises at least one of the following:

the first object or the self-scheduling resource of the first object; and
the second object or the resource of scheduling the first object by the second object.

**12.** The method according to claim 5, wherein

reference SCSs corresponding to at least two of the first virtual object, the second virtual object, and the third virtual object are the same;
and/or
at least two of the control resource processing capability corresponding to the first virtual object, the control resource processing capability corresponding to the second virtual object, and the control resource processing capability corresponding to the third virtual object correspond to the same reference SCS.

**13.** The method according to any one of claims 8 to 12, wherein the virtual object or the control resource processing capability corresponding to the virtual object has a reference subcarrier bandwidth SCS, and the reference SCS comprises any one of the following:

an SCS of the first object or the self-scheduling resource of the first object;
an SCS of the second object or the resource of scheduling the first object by the second obj ect;
the largest SCS of the SCS of the first object or the self-scheduling resource of the first object and the SCS of the second object or the resource of scheduling the first object by the second object;
the smallest SCS of the SCS of the first object or the self-scheduling resource of the first object and the SCS of the second object or the resource of scheduling the first object by the second object;
the weighted sum of the SCS of the first object or the self-scheduling resource of the first object and the SCS of the second object or the resource of scheduling the first object by the second object;
an SCS of a control resource processing capability corresponding to the first object or a control resource processing capability corresponding to the self-scheduling resource of the first obj ect;
an SCS of a control resource processing capability corresponding to the second object or a control resource processing capability corresponding to the resource of scheduling the first object by the second object;
the largest SCS of the SCS of the control resource processing capability corresponding to the first object or a control resource processing capability corresponding to the self-scheduling resource of the first object and the SCS of the control resource processing capability corresponding to the second object or the resource of scheduling the first object by the second obj ect;
the smallest SCS of the SCS of the control resource processing capability corresponding to the first object or a control resource processing capability corresponding to the self-scheduling resource of the first object and the SCS of the control resource processing capability corresponding to the second object or a control resource processing capability corresponding to the resource of scheduling the first object by the second object;
the weighted sum of the SCS of the control resource processing capability corresponding to the first object or a control resource processing capability corresponding to the self-scheduling resource of the first object and the SCS of the control resource processing capability corresponding to the second object or the resource of scheduling the first object by the second object;
a predefined SCS; and
a configured SCS.

**14.** The method according to any one of claims 2 and 7 to 11, wherein the determining, by the terminal, the total number of objects comprises:
determining, by the terminal, the total number of objects based on at least one of the number of first-type objects, the number of second-type objects, and the size of the object group.

**15.** The method according to any one of claims 2 and 7 to 11, wherein the determining, by the terminal, the total number of objects comprises:

determining, by the terminal, the total number of objects based on the total number of first-type objects and/or the total number of second-type objects;
wherein the total number of first-type objects is determined according to the number of first-type objects or the size of the first-type object group; and/or the total number of second-type objects is determined according to the number of second-type objects or the second-type object group.

16. The method according to claim 14 or 15, wherein the determining, by the terminal, the total number of objects further comprises:

removing, by the terminal, a duplication factor from the number of first-type objects, the number of second-type objects, the size of the object group, the size of a first-type object group, and/or the size of a second-type object group;
or
removing, by the terminal, the duplication factor from the total number of objects.

17. The method according to claim 3, wherein the determining, by the terminal, a control resource processing capability corresponding to the virtual object and/or the object group comprises at least one of the following:

in a case that the total number of objects is not greater than the maximum processing number, or in a case that the total number of objects minus the first duplication factor is not greater than the maximum processing number, determining, by the terminal, that the control resource processing capability is a first capability;
in a case that the total number of objects is greater than the maximum processing number, or in a case that the total number of objects minus the second duplication factor is greater than the maximum processing number, determining, by the terminal, that the control resource processing capability is a second capability; and
in a case that the total number of objects is greater than the maximum processing number, or in a case that the total number of obj ects minus the third duplication factor is greater than the maximum processing number, determining, by the terminal, that the control resource processing capability is a third capability.

18. The method according to claim 17, wherein
the determining, by the terminal, that the control resource processing capability is the first capability comprises:

determining, by the terminal, the first capability according to a preset control resource processing capability;
the determining, by the terminal, that the control resource processing capability is the second capability comprises:

determining, by the terminal, the second capability based on at least two of a preset control resource processing capability, the maximum processing number, the size of the object group, and the total number of objects; and
the determining, by the terminal, that the control resource processing capability is the third capability comprises:
determining, by the terminal, the third capability based on the preset control resource processing capability and the second capability, or determining, by the terminal, the third capability based on the first capability and the second capability.

19. The method according to claim 18, wherein the determining, by the terminal, the second capability based on at least two of a preset control resource processing capability, the maximum processing number, the size of the object group, and the total number of objects comprises:

removing, by the terminal, the duplication factor from the size of the object group, and determining the second capability based on at least two of the preset control resource processing capability, the maximum processing number, the size of the object group, and the total number of objects;
or
removing, by the terminal, the duplication factor from the total number of objects, and determining the second capability based on at least two of the preset control resource processing capability, the maximum processing number, the size of the object group, and the total number of objects.

20. The method according to claim 1, wherein
at least one of resources of the first object, the second object, and an object other than the first object scheduled by the second object has an object coefficient, and the object coefficient is associated with a control resource processing capability corresponding to at least one of the resources of the first object, the second object, and the object other than the first object scheduled by the second object.

21. The method according to claim 20, wherein the object coefficient corresponding to the second object and/or the object coefficient corresponding to the resource of the object other than the first object scheduled by the second object comprises any one of the following:

a number of objects scheduled by the second object;
the result of a number of objects scheduled by the second object minusing a duplication factor; and
a number of objects other than the first object among objects scheduled by the second obj ect.

22. The method according to claim 1, wherein the object comprises any of the following:

a cell;
a carrier;
a frequency;
a time domain resource set;
a frequency domain resource set;
a time-frequency domain resource set;
a bandwidth part BWP; and
a resource pool.

23. The method according to claims 16, 17, 19 or 21, wherein the duplication factor is any one of the following:

a preset value;
the number of the first objects;
a configured value on the network side;
a value reported by the terminal;
the number of the second objects; and
a number of second objects corresponding to a particular first object.

24. A control resource monitoring apparatus, comprising:

a first determination module, configured to determine a virtual object and/or an object group;
a second determination module, configured to determine a control resource processing capability corresponding to the virtual object and/or a control resource processing capability corresponding to the object group based on the determined virtual object and/or object group; and
a monitoring module, configured to monitor a control resource according to the control resource processing capability;
wherein the virtual object and/or object group is determined according to at least one of the following:

a first object or a self-scheduling resource of the first object; and
a second object or a resource of scheduling the first object by the second object;
wherein the first object is scheduled by at least two objects, and the second object is at least part of the objects that schedule the first object.

25. The apparatus according to claim 24, wherein the second determination module is further configured to:

determine the total number of objects; and
determine the control resource processing capability corresponding to the virtual object and/or object group according to the total number of objects.

26. The apparatus according to claim 24, wherein the second determination module is further configured to:

compare the total number of objects with a maximum processing number; and
determine the control resource processing capability corresponding to the virtual object and/or object group based on a comparison result.

27. The apparatus according to claim 24, wherein
the first object or the self-scheduling resource of the first object, and/or the second object or the resource of scheduling the first object by the second object is the virtual object.

**28.** The apparatus according to claim 27, wherein

the first object or the self-scheduling resource of the first object, and the second object or the resource of scheduling the first object by the second object is a first virtual object;
and/or
the first object or the self-scheduling resource of the first object is a second virtual object;
and/or
the second object or the resource of scheduling the first object by the second object is a third virtual object.

**29.** A terminal, comprising a processor, a memory, and a program stored in the memory and capable of running on the processor, wherein when the program is executed by the processor, the steps of the method according to any one of claims 1 to 23 are implemented.

**30.** A readable storage medium, wherein the readable storage medium stores a program or an instruction, and when the program or the instruction is executed by a processor, the steps of the method according to any one of claims 1 to 23 are implemented.

Network
side device

11

11

Terminal

Terminal

FIG. 1

201

A terminal determines a virtual object and/or an object group

202

The terminal determines a control resource processing capability corresponding to the virtual object and/or a control resource processing capability corresponding to the object group based on the determined virtual object and/or object group

203

The terminal monitors the control resource according to the control resource processing capability

FIG. 2

cell#1 15kHz

⎫
⎬ Group0-15kHz
⎭

cell#2 30kHz

cell#3 30kHz — Group1-30kHz

cell#4 30kHz

cell#5 60kHz

⎫ Group2-60kHz
cell#6 60kHz

FIG. 3a

cell#1 15kHz

⎫
⎬ Group0-15kHz
⎭

cell#2 30kHz

cell#3 30kHz — Group1-30kHz

cell#4 30kHz

cell#5 60kHz

Group2-60kHz
cell#6 60kHz

FIG. 3b

cell#0 15kHz

cell#1 15kHz — Group0-15kHz

cell#2 30kHz

cell#3 30kHz — Group1-30kHz

cell#4 30kHz

cell#5 60kHz

Group2-60kHz
cell#6 60kHz

FIG. 3c

cell#0 15kHz — Group0-15kHz

cell#1 15kHz — Group1-15kHz

cell#2 30kHz

cell#3 30kHz — Group2-30kHz

cell#4 30kHz

cell#5 60kHz — Group3-60kHz

cell#6 60kHz

FIG. 3d

cell#1 15kHz — Group0-15kHz

cell#2 30kHz — Group1-30kHz

cell#3 30kHz

cell#4 30kHz

cell#5 60kHz — Group2-30kHz

cell#6 60kHz

FIG. 3e

cell#1 15kHz — Group0-15kHz

cell#2 30kHz — Group1-30kHz

cell#3 30kHz — Group2-30kHz

cell#4 30kHz

cell#5 60kHz — Group3-60kHz

cell#6 60kHz

FIG. 3f

cell#1 15kHz ⎫
⎬ Group0-15kHz
cell#2 30kHz ⎭

cell#3 30kHz ⎤ Group1-30kHz
cell#4 30kHz ⎦

cell#5 60kHz ⎱ Group2-60kHz

FIG. 3g

─ 400

Terminal

─ 401

First determination module

─ 402

Second determination module

─ 403

Monitoring module

FIG. 4

─ 500

Terminal

─ 501

Memory

─ 502

Processor

FIG. 5

600

| | | |
|---|---|---|
| 601 ～ | Radio frequency unit | |

610

Memory
609 ～ Application
Operating system

608 ～ Interface unit

607
User input unit
6071 ～ Touch panel
6072 ～ Another input device

Processor

Network module 602

Audio output unit 603

604
Input unit
Graphics processing unit 6041
Microphone 6042

606
Display unit 6061
Display panel

Sensor ～ 605

FIG. 6

## INTERNATIONAL SEARCH REPORT

| International application No. |
|---|
| **PCT/CN2022/109690** |

### A. CLASSIFICATION OF SUBJECT MATTER

H04L 5/00(2006.01)i; H04W 72/04(2009.01)i

According to International Patent Classification (IPC) or to both national classification and IPC

### B. FIELDS SEARCHED

Minimum documentation searched (classification system followed by classification symbols)

H04L5/-; H04W72/-

Documentation searched other than minimum documentation to the extent that such documents are included in the fields searched

Electronic data base consulted during the international search (name of data base and, where practicable, search terms used)

CNABS, CNTXT, CNKI: 小区, 主小区, 辅小区, 多个, 第二, 两个, 调度, PDCCH, 盲检; WPABS, VEN, USTXT, EPTXT, WOTXT, 3GPP: cell, pcell, scell, multiple, second, two, schedule, PDCCH, blind detect

### C. DOCUMENTS CONSIDERED TO BE RELEVANT

| Category* | Citation of document, with indication, where appropriate, of the relevant passages | Relevant to claim No. |
|---|---|---|
| X | WO 2021150644 A1 (QUALCOMM INC.) 29 July 2021 (2021-07-29)<br>claims 1-60 | 1-30 |
| A | CN 107005355 A (LG ELECTRONICS INC.) 01 August 2017 (2017-08-01)<br>entire document | 1-30 |
| A | CN 110475356 A (VIVO COMMUNICATION TECHNOLOGY CO., LTD.) 19 November 2019 (2019-11-19)<br>entire document | 1-30 |
| A | CN 110740479 A (VIVO COMMUNICATION TECHNOLOGY CO., LTD.) 31 January 2020 (2020-01-31)<br>entire document | 1-30 |
| A | ZTE. ""Discussion on Cross-Carrier Scheduling from SCell to PCell""<br>*3GPP TSG RAN WG1 #105-e R1-2104340,* 12 May 2021 (2021-05-12),<br>entire document | 1-30 |
| A | HUAWEI et al. ""Remaining issues for physical downlink control channel""<br>*3GPP TSG RAN WG1 Meeting #95 R1-1812181,* 03 November 2018 (2018-11-03),<br>entire document | 1-30 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2022** | **02 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/109690**

| Patent document cited in search report | | | Publication date (day/month/year) | Patent family member(s) | | | Publication date (day/month/year) |
|---|---|---|---|---|---|---|---|
| WO | 2021150644 | A1 | 29 July 2021 | US | 2021227563 | A1 | 22 July 2021 |
| | | | | TW | 202135575 | A | 16 September 2021 |
| CN | 107005355 | A | 01 August 2017 | JP | 2018504810 | A | 15 February 2018 |
| | | | | JP | 2020099063 | A | 25 June 2020 |
| | | | | CN | 107113143 | A | 29 August 2017 |
| | | | | EP | 3240224 | A1 | 01 November 2017 |
| | | | | US | 2020267743 | A1 | 20 August 2020 |
| | | | | WO | 2016105126 | A1 | 30 June 2016 |
| | | | | CN | 107005386 | A | 01 August 2017 |
| | | | | WO | 2016105127 | A1 | 30 June 2016 |
| | | | | US | 2019246409 | A1 | 08 August 2019 |
| | | | | KR | 20160106093 | A | 09 September 2016 |
| | | | | US | 2017367106 | A1 | 21 December 2017 |
| | | | | US | 2019327752 | A1 | 24 October 2019 |
| | | | | JP | 2018201236 | A | 20 December 2018 |
| | | | | JP | 2019176501 | A | 10 October 2019 |
| | | | | JP | 2018503300 | A | 01 February 2018 |
| | | | | EP | 3240207 | A1 | 01 November 2017 |
| | | | | EP | 3633908 | A1 | 08 April 2020 |
| | | | | ES | 2773918 | T3 | 15 July 2020 |
| | | | | WO | 2016105132 | A1 | 30 June 2016 |
| | | | | JP | 2018500829 | A | 11 January 2018 |
| | | | | JP | 2018186564 | A | 22 November 2018 |
| | | | | EP | 3240348 | A1 | 01 November 2017 |
| | | | | US | 2020022156 | A1 | 16 January 2020 |
| | | | | EP | 3664354 | A1 | 10 June 2020 |
| | | | | KR | 20160106092 | A | 09 September 2016 |
| | | | | KR | 20160106094 | A | 09 September 2016 |
| | | | | US | 2017367092 | A1 | 21 December 2017 |
| | | | | US | 2017311322 | A1 | 26 October 2017 |
| | | | | KR | 101749118 | B1 | 03 July 2017 |
| | | | | IN | 201727018322 | A | 28 July 2017 |
| | | | | EP | 3240207 | A4 | 01 August 2018 |
| | | | | JP | 6378440 | B2 | 22 August 2018 |
| | | | | US | 10492210 | B2 | 26 November 2019 |
| | | | | EP | 3240207 | B1 | 05 February 2020 |
| | | | | IN | 337770 | B | 05 June 2020 |
| | | | | CN | 107005355 | B | 03 July 2020 |
| | | | | EP | 3633908 | B1 | 11 August 2021 |
| | | | | US | 11197307 | B2 | 07 December 2021 |
| CN | 110475356 | A | 19 November 2019 | None | | | |
| CN | 110740479 | A | 31 January 2020 | JP | 2021531695 | A | 18 November 2021 |
| | | | | SG | 11202100414V | A | 25 February 2021 |
| | | | | WO | 2020015643 | A1 | 23 January 2020 |
| | | | | AU | 2019307437 | A1 | 04 February 2021 |
| | | | | US | 2021144746 | A1 | 13 May 2021 |
| | | | | CA | 3106480 | A1 | 23 January 2020 |
| | | | | AU | 2022204006 | A1 | 30 June 2022 |
| | | | | KR | 20210028721 | A | 12 March 2021 |
| | | | | RU | 2754486 | C1 | 02 September 2021 |

Form PCT/ISA/210 (patent family annex) (January 2015)

INTERNATIONAL SEARCH REPORT
Information on patent family members

International application No.

**PCT/CN2022/109690**

| Patent document cited in search report | Publication date (day/month/year) | Patent family member(s) | | Publication date (day/month/year) |
|---|---|---|---|---|
| | | EP | 3813420 A1 | 28 April 2021 |
| | | IN | 202127002212 A | 26 February 2021 |
| | | VN | 78044 A | 25 May 2021 |
| | | CN | 110740479 B | 08 June 2021 |
| | | CN | 113316258 A | 27 August 2021 |
| | | EP | 3813420 A4 | 01 September 2021 |
| | | AU | 2019307437 B2 | 17 March 2022 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110898619